# EUROPEAN PATENT APPLICATION

(11) **EP 4 682 062 A1**
(43) Date of publication of application: **21.01.2026**
(21) Application number: 25177806.4
(22) Date of filing: 20.05.2025
(51) Int. Cl.: B64G 1/10

(54) **SYSTEM AND METHOD FOR IMPROVING THE EFFICIENCY OF GROUND STATIONS AND SPACECRAFT BY PERFORMING AUTONOMOUS SCHEDULING USING NOWCASTS**

(30) Priority: 20.05.2024 US 202463649778 P; 19.05.2025 US 202519212234
(71) Applicant: Ubotica Technologies, Glasnevin, Dublin D11 KXN4 (IE)
(72) Inventor: Rijlaarsdam, David, Dublin, D11KXN4 (IE); Dunne, Aubrey, Dublin, D11KXN4 (IE)
(74) Representative: FRKelly

(57) **Abstract**

Systems and methods for autonomous space-mission coordination integrate ground-based prediction with on-orbit execution. A processing system in a ground station may ingest multi-source environmental data, produce near-term nowcasts through an prediction model, rank pending spacecraft tasks against current resource telemetry, select a high-value task subset, convert the subset into time-tagged command packets, and transmit the packets through a communications link. A processing system aboard each spacecraft may receive the packets, merge them into a persistent schedule, and at each time tag slews attitude, activate an imaging or radar sensor with specified parameters, capture data, and store the data in non-volatile memory. The spacecraft may generate quality metrics for the captured data and return the metrics to the ground station.

## Description

### RELATED APPLICATIONS

This application claims the benefit of priority to U.S. Provisional Patent Application No. 63/649,778 entitled "System and Method for Improving the Efficiency of Ground Stations and Spacecraft by Performing Autonomous Scheduling using Nowcasts" filed on May 20, 2024, the entire contents of which are hereby incorporated by reference for all purposes.

### BACKGROUND

The recent advancement in miniaturized sensor technologies, combined with the reduction in launch costs to low Earth orbit (LEO), has led to a sharp increase in the number of Earth observation (EO) spacecraft being placed in orbit. This is particularly true of Earth observation spacecraft in the CubeSat and SmallSat satellite segments. A majority of their Earth observation sensors operate in the visible spectrum (or near Infrared (IR)). Whilst capturing data across these spectra has high value in a range of applications, the sensing technology is often limited by its inability to observe the Earth's surface when visible atmospheric obstructions are in the viewing path. Atmospheric cloud, haze, ash, fog and smoke are some examples of obstructions through which visible/near Infrared sensing cannot "see". Of these, cloud is by far the most prevalent, covering up to 66% of the visible Earth at any time. Consequently, the ability to realize full value from Earth observation spacecraft assets is often constrained by the "blind" imaging operations that are typically deployed during Earth observation missions. Blind is defined here to mean that neither the imaging schedule, nor the sensor, is cognizant of the likelihood of successful ground view capture from the Earth observation sensor.

### SUMMARY

Various aspects include methods performed by a processing system in a ground-station device, the method which may include receiving environmental data from multiple remote and terrestrial sources, generating prediction data from the environmental data with a prediction model executed by the processing system, evaluating a plurality of pending spacecraft tasks using the prediction data and spacecraft resource data, selecting at least one task that satisfies a predetermined selection criterion, generating command data that corresponds to the selected task, and transmitting the command data through a communication interface to at least one spacecraft.

In some aspects, generating the prediction data may include generating tile-indexed nowcasts that predict cloud opacity and ionospheric disturbance for a prediction horizon shorter than ten minutes. In some aspects, generating the prediction data from the environmental data with the prediction model executed by the processing system may include generating the prediction data from the environmental data with a convolutional-recurrent neural-network model executed by the processing system. In some aspects, evaluating the plurality of pending spacecraft tasks may include computing a success-score for each pending spacecraft task. In some aspects, generating the command data that corresponds to at least one task further may include serializing the command data into time-tagged packets formatted in compliance with Consultative Committee for Space Data Systems (CCSDS) standards. In some aspects, transmitting the command data through the communication interface to the at least one spacecraft causes at least one actuator aboard the at least one spacecraft to alter an orientation state and activate a sensor. In some aspects, receiving the environmental data from the multiple remote and terrestrial sources may include receiving a trigger event that commences generation of the prediction data. In some aspects, receiving the trigger event may include receiving, from a spacecraft, a digital message that requests execution of at least one action, and transmitting a request for corresponding prediction data to a nowcasting node external to the ground-station device in response to receiving the digital message.

In some aspects, generating command data that corresponds to at least one task further may include generating command data for a second spacecraft identified in the plurality of pending spacecraft tasks, and transmitting the command data for the second spacecraft to the second spacecraft. In some aspects, transmitting the command data through the communication interface to at least one spacecraft further may include identifying a destination spacecraft, and forwarding the command data through an intermediary spacecraft that relays the command data to the destination spacecraft.

Some aspects may further include receiving, by a processing system of the at least one spacecraft, the command data, integrating the command data into a schedule stored in memory, commanding an attitude-control subsystem of the at least one spacecraft to orient the spacecraft toward target coordinates at a time tag identified in the received command data, operating an imaging sensor according to the associated sensor parameters to acquire data, and storing the acquired data in on-board storage. In some aspects, operating the imaging sensor according to the associated sensor parameters to acquire the data may include the at least one spacecraft disabling the imaging sensor and activating a radar sensor in accordance with the associated sensor parameters. In some aspects, storing the acquired data in the on-board storage may include compressing the acquired data with an encoder selected according to the command data.

Further aspects may include methods performed by a processing system aboard a spacecraft, the method which may include receiving, by the processing system, prediction data that describes environmental conditions for at least one geographic region, locally generating command data that corresponds to a selected task based on the received prediction data, integrating the command data with a schedule stored in memory, orienting the spacecraft toward a target coordinate defined in the command data at a corresponding time tag, operating an imaging sensor according to sensor parameters defined in the command data, acquiring image data with the imaging sensor, and storing the image data in non-volatile storage.

In some aspects, locally generating the command data that corresponds to the selected task based on the received prediction data may include determining an action for a second spacecraft, transmitting the action to the second spacecraft, and storing confirmation that the action left the processing system. Some aspects may further include evaluating whether the schedule contains an imaging entry, calculating a success probability for that imaging entry from the prediction data, and retaining the imaging entry in response to determining that the probability exceeds a first threshold.

In some aspects, replacing the imaging entry with the alternative acquisition strategy in response to determining that the probability does not exceed the first threshold may include replacing the imaging entry with an acquisition strategy that may include generating a lower-resolution imaging entry in response to determining that lower-resolution imaging may be acceptable. In some aspects, replacing the imaging entry with the alternative acquisition strategy in response to determining that the probability does not exceed the first threshold may include replacing the imaging entry with an acquisition strategy that may include activating a radar sensor when radar imaging may be acceptable.

Some aspects may further include using the received prediction data to detect an interesting weather event and inserting an imaging entry that targets the detected weather event. Some aspects may further include performing communication actions that include selecting optical or radio frequency transmission and using the selected transmission to exchange data with a ground station. Some aspects may further include determining whether downlink data transfer may be necessary, calculating optical and radio frequency link success likelihoods from prediction data, and selecting optical downlink when an optical likelihood exceeds a first threshold, selecting radio frequency downlink when the optical likelihood does not exceed the first threshold and the radio frequency likelihood exceeds a second threshold, or rescheduling the downlink when neither likelihood exceeds its respective threshold. Some aspects may further include using the received prediction data to detect a spacecraft trajectory that intersects a solar-event region exceeding a radiation limit, inserting a safe-mode entry into the schedule before intersection, and inserting a recovery entry after the radiation limit subsides.

In some aspects, inserting a safe-mode entry into the schedule before the intersection may include adding to the schedule at least one command item that, when executed by the processing system, directs the processing system to perform at least one operation which may include actuating a cover that blocks an optical aperture of the spacecraft, retracting each deployable solar array, disabling every subsystem identified as non-essential in a stored subsystem list, switching an attitude-control subsystem to a low-power mode, verifying that the spacecraft remains in a power-positive state, operating thermal-control hardware to maintain thermal equilibrium, or reducing a processor-clock frequency to a low-power setting.

Further aspects may include a computing device having a processor configured with processor-executable instructions to perform various operations corresponding to the methods discussed above.

Further aspects may include a computing device having various means for performing functions corresponding to the method operations discussed above.

Further aspects may include a non-transitory processor-readable storage medium having stored thereon processor-executable instructions configured to cause a processor to perform various operations corresponding to the method operations discussed above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is a component block diagram illustrating a system, which includes spacecraft in the form of satellites, connected to a ground station using a transmission network, that is suitable for implementing various embodiments.
FIGs. 2A and 2B are activity diagrams illustrating an overview of a method of improving the efficiency of spacecraft by performing autonomous scheduling using nowcasts in accordance with various embodiments.
FIGs. 3A-3C are tables that illustrate schedules, nowcasts, and their associated actions in accordance with some embodiments.
FIG. 4 is a process flow diagram illustrating a method of generating nowcasts in accordance with some embodiments.
FIG. 5A-5E are process flow diagrams illustrating a method of requesting nowcasts and determining actions in accordance with some embodiments.
FIGs. 6A-6F are process flow diagrams illustrating methods of determining one or more acquisition actions, communication actions, and operational actions in accordance with some embodiments.
FIGs. 7A-7C are process flow diagrams illustrating methods of updating a schedule and performing actions in accordance with some embodiments.
FIGs. 8A-8C are process flow diagrams illustrating methods of performing one or more acquisition actions, communication actions, and operational actions in accordance with some embodiments.
FIG. 9A is a component diagram of a processing system suitable for use with the various embodiments.
FIG. 9B is a component diagram of a server computing device suitable for use with the various embodiments.
FIG. 10A is a side view of an exemplary satellite (CubeSat) that includes a camera, memory, and a processor that could be configured in accordance with the various embodiments.
FIG. 10B is an isometric view of the exemplary satellite that includes a camera, memory, and processor that could be configured in accordance with the various embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

In overview, the embodiments provide an end-to-end framework that couples ground-based nowcast generation, priority-driven scheduling, and on-board execution to guide Earth-observation spacecraft in near-real time. Some embodiments may include a cloud-hosted inference engine that continuously fuses multi-source weather and space-weather data, produces minute-scale predictions for tiled geographic regions, and publishes them to a ground-station scheduler. Some embodiments may include a scheduler that ranks pending image, communication, and protective tasks against those predictions, composes time-tagged command packets, and forwards them through an inter-satellite mesh to single or constellation spacecraft. In some embodiments, each spacecraft may be configured to merge the incoming packets into its local timeline, perform attitude manoeuvres, sensor operations, or safe-mode sequences as prescribed, and return quality metrics that feed model retraining. Parallel control loops on ground and flight processors may maintain autonomous operation without human intervention between routine planning cycles.

The embodiments improve the performance of the computing-system because each processing layer-ML inference accelerators, ground-station CPUs, spacecraft microcontrollers-may handle narrowly scoped workloads that match its capabilities and avoid wasted cycles and power. Ground-side model execution offloads heavy tensor operations from flight hardware, letting spacecraft processors focus on deterministic control loops that operate within tight real-time bounds. Prediction-guided task pruning prevents unproductive image captures, reduces downlink volume, and lowers onboard storage churn, which may prolong flash endurance and decrease data-handling latency. Dynamic link-margin evaluation may select optical or RF channels before each pass, raising average throughput while preventing failed contacts that would trigger retransmissions. Early hazard detection may command safe-mode entry only when necessary to limit subsystem off-time and preserve duty cycles to improve the performance and functioning of the device.

The word "exemplary" is used herein to mean "serving as an example, instance, or illustration." Any implementation described herein as "exemplary" is not necessarily to be construed as preferred or advantageous over other implementations.

The terms "component," "system," and the like may be used herein to refer to a computer-related entity, such as hardware, firmware, a combination of hardware and software, software, or software during its execution. These entities may be configured to carry out specific operations or functionalities. For example, a component may encompass a process operating on a processor, a processor itself, an object, an executable, a thread of execution, a program, or a computing device. As an illustrative example, both an application running on a computing device and the computing device itself could be termed a component. One or more components may be situated within a process and/or thread of execution and/or may be localized on a single processor or core or distributed across multiple processors or cores. In addition, these components may execute from various non-transitory computer-readable media having various instructions and/or data structures stored thereon. Components may communicate by way of local and/or remote processes, function or procedure calls, electronic signals, data packets, memory read/writes, and other known computer, processor, and/or process-related communication methodologies.

The term "computing device" may be used herein to refer to any or all of server computing devices, personal computing devices, desktop computers, workstations, laptops, netbooks, Ultrabooks, tablets, smartphones, personal data assistants (PDAs), palm-top computers, wearable devices, multimedia-enabled mobile devices, Internet of Things (IoT) devices (e.g., smart TVs, speakers, locks, lighting systems, switches, doorbell cameras, and security systems, etc.), vehicles (e.g., automobiles, etc.), advanced driver-assistance systems (ADAS), engine control units (ECUs), infotainment systems, and other similar chips or devices that include a memory and programmable processor for providing the functionality described herein.

The term "processing system" may be used herein to refer to one or more processors, including multi-core processors, that are organized and configured to perform various computing functions. Various embodiment methods may be implemented in one or more of multiple processors within a processing system as described herein.

The terms "mobile device," "wireless device," and "user equipment (UE)" may be used interchangeably and may refer to any of a wide variety of electronic devices capable of wireless communication, including cellular phones, smartphones, personal data assistants (PDAs), palm-top computers, tablet computers, laptops, wireless email receivers, VoIP phones, wire-line devices, devices incorporating Machine-to-Machine (M2M) technology, multimedia and Internet-enabled phones, and similar electronic devices capable of sending and receiving wireless communication signals. A wireless device may include a programmable processor and memory. In a preferred embodiment, the wireless device is a cellular handheld device (e.g., a mobile device), which may communicate via a cellular telephone communications network.

The term "spacecraft" may refer to any of a wide variety of humanmade devices that are capable of operating near or in space, including Earth observation systems, satellites (e.g., CubeSats, BoxSats, SmallSats), and rockets. The term "spacecraft" may refer to a single spacecraft or a plurality of spacecraft.

The terms "machine learning algorithm", "artificial intelligence model", and the like may be used herein to refer to any of a variety of information structures that may be used by a computing device to perform a computation or evaluate a specific condition, feature, factor, dataset, or behavior on a device. Examples of machine learning (ML) algorithms include network models, neural network models, inference models, neuron models, classifiers, random forest models, spiking neural network (SNN) models, convolutional neural network (CNN) models, recurrent neural network (RNN) models, deep neural network (DNN) models, generative network models, ensemble networks, generative adversarial networks, and genetic algorithm models. In some embodiments, a machine learning algorithm may include an architectural definition (e.g., the neural network architecture, etc.) and one or more weights (e.g., neural network weights, etc.).

The term "neural network" may be used herein to refer to an interconnected group of processing nodes (or neuron models) that collectively operate as a software application or process that controls a function of a computing device and/or generates an overall inference result as output. Individual nodes in a neural network may attempt to emulate biological neurons by receiving input data, performing simple operations on the input data to generate output data, and passing the output data (also called "activation") to the next node in the network. Each node may be associated with a weight value that defines or governs the relationship between input data and output data. A neural network may learn to perform new tasks over time by adjusting these weight values. In some cases, the overall structure of the neural network and/or the operations of the processing nodes do not change as the neural network learns a task. Rather, learning is accomplished during a "training" process in which the values of the weights in each layer are determined. As an example, the training process may include causing the neural network to process a task for which an expected/desired output is known, comparing the activations generated by the neural network to the expected/desired output, and determining the values of the weights in each layer based on the comparison results. After the training process is complete, the neural network may begin "inference" to process a new task with the determined weights.

The term "inference" may be used herein to refer to a process that is performed at runtime or during execution of the software application program corresponding to the machine learning algorithm. Inference may include traversing the processing nodes in a network (e.g., neural network, etc.) along a forward path (which may include some backwards traversals) to produce one or more values as an overall activation or overall "inference result".

The terms "image" and "frame" may both be used herein to refer to visual data acquired by a camera device. An image may include a multitude of color/spectoral channels and pixels. An image may be considered to be acquired or captured successfully if the image is usable and useful due to it satisfying some desired image criteria (e.g., the percentage of the image that is cloud-free is above a threshold value).

The terms "area of interest" (AoI), "region of interest" (RoI), and location are used herein to refer to a geographical area that has a particular significance in a given context.

Nowcasting is the concept of generating nowcasts (e.g., immediate weather predictions, etc.) by measuring, estimating, or predicting the current or near-future environmental conditions, reports, or events at a given area of interest. The environmental conditions may relate to natural phenomena (e.g., fog, cloud, volcanic ash) or human caused phenomena (e.g., smoke, smog). Nowcasting may use algorithms that are significantly faster than traditional weather prediction algorithms, yielding real-time current and near-future weather predictions, whilst sacrificing accuracy of mid-future and far-future predictions. These algorithms may utilize data from multiple sources, may use data fusion techniques, and they may include machine learning algorithms. Nowcasting may provide higher spatial resolution in terms of measurements, estimates, and predictions than traditional weather forecasting systems, but they may provide this over smaller areas of interest (e.g., a nowcast may be determined for an area that is 1km x 1km). Nowcasts may also provide higher temporal resolution, but over a shorter time horizon, than traditional weather forecasting systems.

Novel observing strategies (NOS) have been proposed for, and to a limited extent applied to, Earth observation spacecraft. Novel observing strategies may improve the rate of return of usable data for Earth observation systems by optimizing the acquisition of new data (e.g., scheduling of new acquisitions triggered by on-ground in-situ sensor networks (sensorweb), scheduling of new acquisitions by analyzing data captured by other Earth observation spacecraft (tip-and-cue), adapting acquisition schedules dynamically by looking forward in the flight direction of the spacecraft using a primary or secondary sensor (i.e., dynamic targeting)).

While both classical weather predictions and geostationary weather satellite observations may have been used previously to inform Earth observation satellite operations, the accuracy of these solutions may have been limited by time and/or spatial resolutions constraints. Classical weather predictions are less accurate in predicting real-time weather changes, and they may require significant time to process and update. Likewise, geostationary cloud masks lack resolution, and they may take significant time to reach a ground station (e.g., in the order of tens of minutes), after which processing and re-upload to an Earth observation spacecraft will take additional time. This makes the use of this data less accurate due to the significant time delay between the current weather state at the area of interest and the situation on the ground once a spacecraft passes over the area of interest.

With the advent of inter satellite links (ISL), persistent and/or always available communication with an Earth observation spacecraft is now feasible. Therefore, it is now possible to upload commands or data in real-time, or mere minutes before a scheduled duty cycle. Previously, a spacecraft had to have line of sight with a ground station to receive data, making communication intermittent with the times between uplink ranging from hours to days.

Currently, there are solutions that screen Earth observation images captured by spacecraft for cloud content on-board the spacecraft. These solutions may incorporate classical algorithms (e.g., pixel thresholding) or machine learning algorithms. However, while this solution may reduce the storage and downlink requirements, it may not reduce the power consumption or operational time of the spacecraft with respect to regular operations. This may be because image data still needs to be captured before the image data is screened for cloud content. Therefore, a system that prevents the waste of these system resources by computing the likelihood of successfully capturing an image (e.g., due to cloud cover over the area of interest) would greatly increase the amount of usable images (e.g., non-cloudy image data) that an Earth observation system may return to Earth.

By utilizing nowcasts to predict local environmental conditions at an area of interest immediately before a spacecraft acquires images of the area of interest, the current environmental conditions at the area of interest can be predicted with a high degree of accuracy. This information may then be utilized to make an informed decision on the expected value generated by the upcoming image data acquisition. As an example, if it is predicted that the area of interest will have cloud cover at the time of image acquisition that will prevent the spacecraft from imaging the ground surface, then planned image acquisition can be aborted. This may save valuable system resources within the spacecraft (e.g., power, storage, and downlink bandwidth), and these system resources may be freed-up for alternative purposes (e.g., image acquisitions at a later time that are more likely to acquire usable data).

A particular example of the problem described above is an Earth observation system where storage is limited to the extent that the screening of captured data is not feasible. This may occur when on-board storage is low, or if the captured data is large (e.g., as is the case for hyperspectral data or very high spatial resolution data). In this example, the amount of data that needs to be stored and processed in order to determine whether or not the acquired data is suitable for storage and downlink can be prohibitively large, and only a data suitability decision before the data is captured can solve the problem of downlinking potentially useless data. To make this decision with the required level of accuracy, this decision cannot be made based on local weather conditions from tens of minutes ago, as the weather conditions (e.g., cloud cover) may have changed between the decision time and image acquisition time. While in-situ measurements uplinked to spacecraft in real-time might provide real-time cloud cover conditions to spacecraft, the requirement to place these sensors with global coverage makes such a system infeasible. Therefore, predicting environmental conditions locally, and with high accuracy in the near future, is required to solve the problem in a scalable manner.

A second example is a power constrained spacecraft system, where acquiring and processing an image on-board may be infeasible due to a lack of available on-board energy. In this example, avoiding these operations by canceling an acquisition operation that is unlikely to result in a useful image (e.g., an image that is not obscured by cloud cover) by nowcasting on ground may create the possibility of spending the saved energy on an alternative acquisition that may not have been possible otherwise.

A third example is an operationally constrained spacecraft system that is utilized to such a high degree that operational time causes constraints on the available imaging opportunities, or the orbital and system parameters cause the system to miss certain imaging opportunities. This may occur if two areas of interest are located close together, but they cannot be captured in a single acquisition (e.g., due to an insufficient sensor swath, due to insufficient time between area of interest overflights to suitably reconfigure the imager). In this example, a choice must be made between pointing the imager to the first or second area of interest. Similarly, if images of an area of interest cannot be acquired at a specific time because the imaging system in the spacecraft is not available due to another operation being executed at that time, then a choice must be made between that image acquisition and the other operation. In these examples, the methods described herein may inform this decision making process.

In the various embodiments, if an image acquisition is unlikely to be successful, then it can be removed from the decision space. Furthermore, the acquisition of images of areas of interest may be assigned or reassigned priorities based on the nowcasts and the likelihood of successful image acquisition, thus aiding a dynamic rescheduling of tasks and acquisitions based on the priority scores.

A fourth example is where on-board processing of captured images is not a feasible solution, but the methods described herein are feasible, is the situation where no suitably performant algorithm (e.g., a cloud screening algorithm) exists for the deployed spacecraft. Typically, on-board cloud screening algorithms utilize neural networks to detect clouds in images due to their high performance and robustness. However, these neural networks need to be trained on representative data in order to be performant. If a new spacecraft has been launched for which no acquisition data is available, it may be difficult to train a performant neural network for that system. In addition, even if data is available for the spacecraft, labeling that data for neural network training may be prohibitively expensive. Since the methods proposed herein are universally applicable (e.g., regardless of the spacecraft sensor or platform), they can be applied immediately to both new spacecraft and spacecraft for which no data exists prior to launch.

A fifth example is optimization of constellation operations, where the operations of multiple spacecraft may need to be planned. The capturing, processing, and relaying of current environmental conditions (e.g., cloud levels) to trailing spacecraft may not be fast enough to provide data in time to a trailing spacecraft that is close to the first spacecraft. Even if it is fast enough, it may only be accurate for a limited amount of time, which may cause each trailing spacecraft to reacquire and process the same area of interest if the previous acquisition for the same area of interest was not successful (e.g., due to cloud cover). For this reason, the on-board processing of data to detect cloud levels may have a narrow time window in which the results can be used to inform constellation operations, thus limiting its applicability. Nowcasting on the ground can be utilized to overcome this problem, because the window for which cloud cover is predicted can be tuned to match the constellation dynamics so that current nowcasts (e.g., cloud cover states) are always available to the spacecraft at the appropriate times. In addition, since these nowcast predictions are made on the ground, integration into constellation planning and scheduling systems is readily achievable, and it may not require continuous downlink of inference output from the spacecraft.

A sixth example is the cost efficient acquiring of usable images by an entity on the ground. An external system may make decisions regarding the sources that it uses to obtain usable images (e.g., selecting a first operator of Earth observation spacecraft ahead of a second operator of Earth observation spacecraft due to the likelihood of them being able to provide usable images, or indeed deciding to use recently captured images instead of acquiring new images due to a low likelihood of being able to capture usable new images in the immediate future).

The various embodiments may improve the efficiency of ground stations and spacecraft by performing autonomous scheduling using nowcasts. The autonomous scheduling may relate to image acquisition actions, communication actions, and operational actions. The nowcasts may relate to environmental events, such as weather reports. The improved efficiency may result in the various embodiments obtaining more valuable information quicker and more cost-effectively.

In the various embodiments, nowcasts or decisions made on the ground (e.g., go/no-go/alternative acquisition actions) may be sent to one or more spacecraft (e.g., using inter satellite links). The former (i.e., nowcasts) can be used to perform data fusion and operational decision making on a spacecraft (e.g., autonomous rescheduling of operations), and the latter (i.e., decisions) can be used if limited data sizes are required (e.g., for transmission to the spacecraft and/or for storage on the spacecraft).

In the various embodiments, nowcasts relating to space weather may be used to instruct spacecraft to perform operational actions in real-time (e.g., solar flare alerts may be transmitted to spacecraft (including non-Earth observation spacecraft) to instruct those spacecraft to go into a safe operational mode). Such embodiments may prevent potential damage to spacecraft that may otherwise be caused by a significant solar event.

The various embodiments may enable nowcasts to be utilized to update Earth observation spacecraft operational schedules in real-time on the ground, followed by uploading the new operational schedules to spacecraft over a transmission network (e.g., utilizing a ground station and/or inter satellite links).

The various embodiments may enable actions (e.g., go/no-go acquisition decisions) to be sent to spacecraft shortly before image acquisition of one or more areas of interest. In an embodiment, the spacecraft may use received nowcasts and/or actions for on-board re-scheduling.

The various embodiments may enable spacecraft to perform data fusion using nowcasts (e.g., weather forecasts for one or more areas of interest) and autonomously determine resulting actions (e.g., go/no-go decisions relating to the acquisition of one or more images). Examples of data sources for fusion may include current remaining system resources within the spacecraft, spacecraft stability, secondary imager measurements, relative values of other competing operations.

The various embodiments may enable nowcasts of solar events to cause spacecraft (e.g., Earth observation spacecraft, non-Earth observation spacecraft) to perform "safe mode" operational actions to protect themselves from damage.

The various embodiments may enable nowcasts to be utilized to decide in real-time on the use of optical communications (i.e., line-of-sight communications) or radio frequency (RF) communications between the ground and the spacecraft. In an embodiment, if the weather may prevent optical communications, or reduce the efficiency of radio frequency communications, then the ground station and/or the spacecraft may perform one or more communication actions (e.g., re-schedule data transfers, or change from optical to RF communications).

The various embodiments may enable nowcasts to be utilized to predict significant weather events and dynamically schedule image acquisitions of those events. For example, if nowcasting determines that a storm has suddenly started developing, a frost event endangering crops is expected, or extreme temperatures in combination with drought is likely in an area of interest, then the value of image data from this area of interest may increase dramatically.

The various embodiments may enable nowcasts to be applied to a constellation of mixed Earth observation spacecraft types, dynamically allocating and re-allocating either passive (e.g., optical) spacecraft or active (e.g., SAR) spacecraft to planned area of interest acquisitions based upon the nowcasts (e.g., current weather conditions). These embodiments may equally apply to single spacecraft flying heterogeneous sensors. In this latter scenario, the nowcast may be used to alter an imaging schedule to utilize an onboard SAR sensor rather than an onboard optical sensor (e.g., due to cloud cover that is opaque to optical sensing but transparent to SAR sensing).

The various embodiments may enable nowcasts to be utilized to inform on-board schedulers in spacecraft in real-time, of environmental conditions such that the schedulers update the image acquisition schedule based on a combination of the nowcast (e.g., certainty and type) and the current queue of candidate areas of interest. The scheduler may balance the risk against the reward (e.g., partially cloudy visible Earth observation image versus lower resolution near Infrared image).

The various embodiments may enable nowcasts to be utilized to determine the optimum time, repository, or geolocation to query image repositories on the ground to retrieve the most valuable data with the lowest latency (i.e., nowcasting applied for optimal image retrieval instead of optimal image acquisition).

The various embodiments may enable nowcasts to be utilized to determine which specific spacecraft, or imager type, to task for a given area of interest in order to maximize the return on the cost of acquiring the image or images of the area of interest.

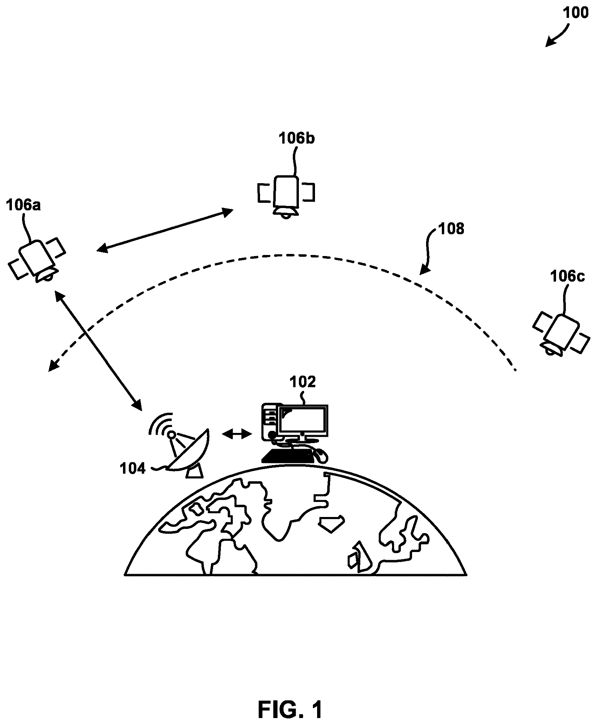

FIG. 1 is a component block diagram illustrating a system 100, which includes spacecraft in the form of satellites, connected to a ground station using a transmission network, that is suitable for implementing various embodiments. Spacecraft 106a-106c may all be capable of acquiring images (e.g., using passive sensors such as cameras). Spacecraft 106a-106c may also contain active sensors. Spacecraft 106a-106c are depicted as following an orbit 108.

Spacecraft 106a-106c may be capable of performing communications using radio frequency (RF) communications and/or optical communications. They may use these communication capabilities to receive instructions, to receive data (e.g., measurements from ground sensors), and/or to send data (e.g., images).

Spacecraft 106a is depicted as currently having direct communications with a terrestrial transmitter/receiver 104 that is associated with ground station 102. In the various embodiments, ground station 102 may be connected with many terrestrial transmitters/receivers using terrestrial communications links. Thus, ground station 102 may, or may not, be co-located with terrestrial transmitter/receiver 104. Ground station 102 may also include one or more terrestrial transmitters/receivers 104, which may be physical antenna buildings/facilities (or ground antennas) on the ground. In the various embodiments, ground station 102 may include mission operation centers and mission planning centers in a single location or distributed across multiple locations.

Spacecraft 106a is also depicted as currently having direct communications with spacecraft 106b, and spacecraft 106b is depicted as currently having direct communications with spacecraft 106c. The spacecraft and terrestrial transmitters/receivers may enable any spacecraft to communicate with any other spacecraft and/or the ground station 102 via a transmission network of intermediary spacecraft and terrestrial transmitters/receivers (e.g., spacecraft 106c may communicate with spacecraft 106a via spacecraft 106b, spacecraft 106b may communicate with ground station 102 via spacecraft 106a and terrestrial transmitter/receiver 104).

Some embodiments may include methods for enhancing spacecraft efficiency through autonomous scheduling using nowcasts that may be performed by a processor or processing system within a computing system. In some embodiments, the methods may include establishing communication links among a ground station, a nowcasting node, a scheduler, and spacecraft. The ground station, which may house the nowcasting node and scheduler, may generate nowcasts using advanced machine learning algorithms on data from multiple sources, such as satellite imagery and ground sensors. The scheduler may use these nowcasts to dynamically adjust schedules and allocate tasks based on priority. In some embodiments, the method may operate in two parallel blocks: one for generating nowcasts and another for updating and executing spacecraft schedules. Nowcasts may be generated by the nowcasting node, stored for future use, and requested by the scheduler based on triggers such as timers, spacecraft requests, or external events. The scheduler may determine actions based on the nowcasts, update the spacecraft's schedule, and transmit the actions to the spacecraft for execution. The actions may include image acquisition, communication, and operational adjustments. The system may continuously monitor performance, process acquired images, send feedback to improve future nowcasts, and update resource allocation to balance trade-offs between operational efficiency and responsiveness.

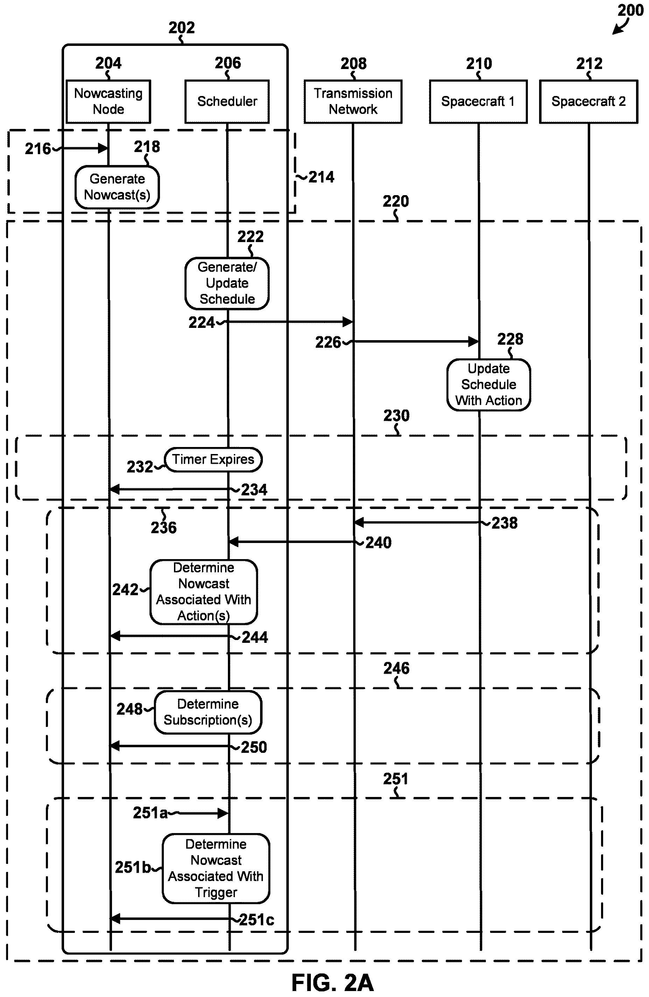

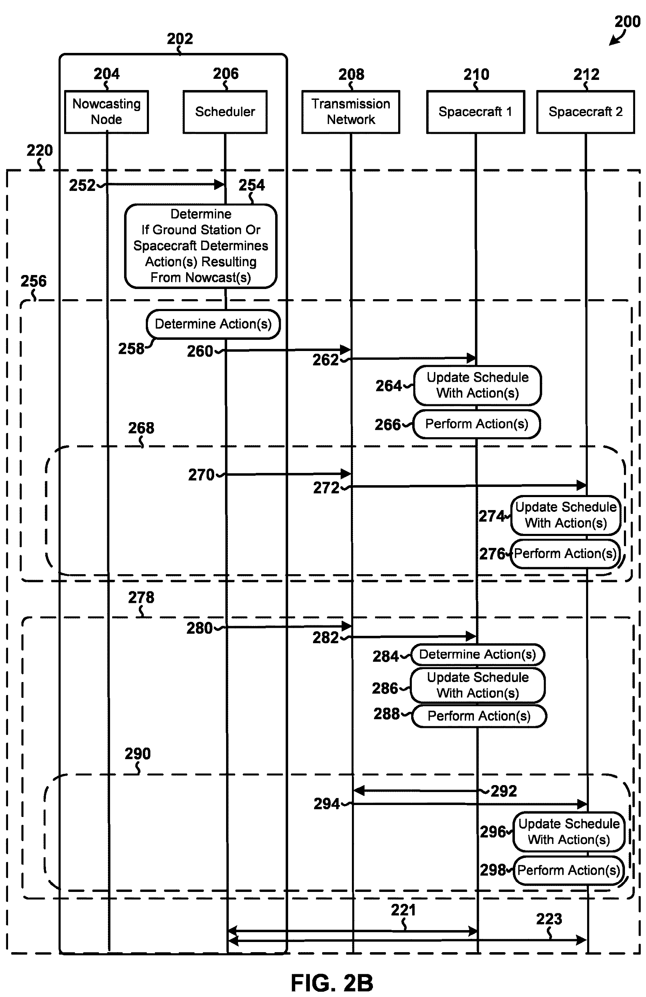

FIGs. 2A and 2B are activity diagrams illustrating an overview of a method 200 of improving the efficiency of spacecraft by performing autonomous scheduling using nowcasts in accordance with various embodiments. All or portions of method 200 may be performed by a processor or processing system included in a computing system, which may be included in or associated with a ground station 202 (e.g., ground station 102 with reference to FIG. 1), transmission network 208 (e.g., point-to-point communications links, terrestrial transmitter/receiver 104 and spacecraft 106a-106c with reference to FIG. 1), and/or spacecraft 1 210 and spacecraft 2 212 (e.g., spacecraft 106a-106c with reference to FIG. 1).

Ground station 202 may contain a nowcasting node 204 and a scheduler 206. Nowcasting node 204 may be responsible for, or capable of, generating nowcasts. In an embodiment, nowcasting node 204 may be external to the ground station 202, and it may be owned and operated by an external entity. Scheduler 206 may be responsible for, or capable of, receiving requests for nowcasts and/or actions, retrieving nowcasts, generating and scheduling actions based upon retrieved nowcasts, and sending now casts and/or actions to spacecraft. Each spacecraft (e.g., spacecraft 1 210 and spacecraft 2 212) may contain an internal scheduler that is capable of performing similar functionality to scheduler 206).

In some embodiments, the nowcasting node 204 may be configured to use advanced machine learning algorithms, including convolutional neural networks (CNNs) and recurrent neural networks (RNNs), to predict environmental conditions with high spatial and temporal resolution. Data sources for nowcasting may include real-time satellite imagery, ground-based meteorological sensors, historical weather data, etc. In some embodiments, the nowcasting node 204 may include, for example, a multi-core processing system with specialized hardware accelerators for rapid data processing and model inference.

In some embodiments, the scheduler 206 may be configured to use a priority-based optimization algorithm efficiently to allocate tasks. The scheduler 206 may integrate inputs from the nowcasting node 204, ground sensors, and spacecraft telemetry to dynamically adjust schedules. In some embodiments, the scheduler 206 may be configured to use a combination of heuristic and machine learning techniques to balance competing priorities for the use of resources on the spacecraft.

In some embodiments, the image acquisition process may begin with selecting an area of interest based on the nowcasts. Camera settings (e.g., exposure time, gain, resolution, etc.) may be configured based on environmental conditions. The spacecraft imaging system may capture high-resolution images that are then stored in on-board memory. Post-processing may include cloud detection and image quality assessment before data downlink.

Returning to FIG. 2A, method 200 may include two distinct blocks which may occur in parallel.

The first block (i.e., block 214) may repeat as long as the nowcasting node 204 is operating. In operation 216, the nowcasting node may receive input data from one or more external systems. In operation 218, the nowcasting node 204 may generate one or more nowcasts. It may then store these nowcasts in a memory or cache for future retrieval.

The second block (i.e., block 220) may repeat as long as the spacecraft 1 210 is operating. In operation 222, the scheduler 206 may generate a new schedule, or update an existing schedule, for spacecraft 1 210. In operation 224, the scheduler 206 may send one or more actions resulting from the new or updated schedule to the transmission network 208. In operation 226, the transmission network 208 may send the actions to spacecraft 1 210. In operation 228, spacecraft 1 210 may update its on-board schedule with the actions.

Method 200 may provide multiple alternative mechanisms for the scheduler 206 to request nowcasts from the nowcasting node 204.

The first mechanism (i.e., block 230) is based upon a timer trigger. In operation 232 a timer in the scheduler 206 expires. In operation 234, the scheduler 206 may send a request for nowcasts to the nowcasting node 204.

The second mechanism (i.e., block 236) is based upon a spacecraft trigger. In operation 238, spacecraft 1 210 may send a request for actions and/or nowcasts to the transmission network 208. In operation 240, the transmission network 208 may send the request for actions and/or nowcasts to the scheduler 206. In operation 242, the scheduler 206 may determine which nowcasts are associated with any actions that were received as part of operation 240. In operation 244, the scheduler 206 may send a request for nowcasts to the nowcasting node 204.

The third mechanism (i.e., block 246) is based upon a subscription trigger. In operation 248, the scheduler 206 may determine which subscriptions for nowcasts it needs based upon the spacecraft for which it is creating and updating schedules. In operation 250, the scheduler 206 may send a request for subscriptions to nowcasts to the nowcasting node 204. The nowcasting node 204 may store the subscriptions, and regularly or continuously compare them to the nowcasts (e.g., generated as part of operation 218).

The fourth mechanism (i.e., block 251) is based upon an external trigger. In operation 251a, the scheduler 206 may receive a trigger from an entity on the ground (e.g., a user via a graphical user interface, an operator, an external system via an application programming interface). In various embodiments, the external trigger may come from soil moisture sensors (e.g., soil moisture sensors in an agricultural field may trigger a spacecraft image capture if the soil moisture levels are within certain ranges), algae bloom detectors (e.g., an in-situ microscope may detect a level of microscopic algae above a certain threshold locally and consequently trigger a spacecraft to capture imagery of the location to determine the extent of the algae bloom), fire detectors (e.g., an automated forest fire detection sensor, such as a camera with integrated Al-based smoke plume detection at a vantage point, may detect a smoke plume and consequently trigger a spacecraft to capture images of the area of interest in order to determine the exact location and scope of the forest fire), livestock trackers (e.g., a system that uses GPS receiver-trackers attached to cattle may determine that the herd is outside of its allocated pasture and consequently trigger a spacecraft to capture an image in order to assess the situation at the current location of the herd), power plants (e.g., a sudden decrease of generated power from remote solar panels may be detected and trigger a spacecraft to capture images of the solar panels, which may reveal damage to, or dust covering, the solar panels), stock trading entities (e.g., due to volatility, a day trading algorithm may require an accurate measurement of current oil storage levels and consequently trigger a spacecraft to capture images of strategic reserves in order to make an accurate assessment of the amount of oil currently in storage), earthquake detectors including seismic sensors (e.g., if an earthquake is detected by a sensor, then a monitoring system may immediately trigger a spacecraft to capture images of the affected area in order to assess the damage for first responders and emergency services), flood detectors (e.g., if a critical water level rise is detected by one or more sensors, then a system may trigger a spacecraft to capture images of the affected area in order to make damage assessments for first responders and emergency services), and volcanic eruption detectors (e.g., if a volcanic eruption is detected by one or more sensors, then a system may trigger a spacecraft to capture images for scientific study purposes and for danger assessment purposes). In operation 251b, the scheduler 206 may determine which nowcasts are associated with the trigger that was received as part of operation 251a. In operation 251c, the scheduler 206 may send a request for nowcasts to the nowcasting node 204.

In operation 252, the nowcasting node 204 may send one or more nowcasts to the scheduler 206. These nowcasts may have been generated as part of operation 218. In an alternative embodiment, the nowcasting node 204 may generate the nowcasts in response to receiving a request or subscription for the nowcasts.

In operation 254, the scheduler 206 may determine whether the ground station (e.g., ground station 202) or the spacecraft (e.g., spacecraft 1 210) is responsible for determining one or more actions resulting from the nowcasts.

In response to determining that the ground station is responsible for determining one or more actions resulting from the nowcasts (e.g., as part of operation 254), the ground station may determine one or more actions resulting from the nowcasts in block 256. In operation 258, the scheduler 206 may determine one or more actions resulting from the nowcasts (e.g., received in operation 252). In operation 260, the scheduler 206 may send the actions to the transmission network 208. In operation 262, the transmission network 208 may send the actions to the spacecraft 1 210. In operation 264, the spacecraft 1 210 may update its schedule with the received actions. In operation 266, the spacecraft 1 210 may perform one or more actions. In an embodiment, there may be a significant time lapse between spacecraft 1 210 performing operations 264 and 266.

If the scheduler 206 determined that one or more actions relate to spacecraft 2 212 (e.g., as part of operation 258), then the scheduler 206 may send these actions to spacecraft 2 212 (e.g., as part of optional block 268). In operation 270, the scheduler 206 may send the actions to the transmission network 208. In operation 272, the transmission network 208 may send the actions to the spacecraft 2 212. In operation 274, the spacecraft 2 212 may update its schedule with the received actions. In operation 276, the spacecraft 2 212 may perform one or more actions. In an embodiment, there may be a significant time lapse between spacecraft 2 212 performing operations 274 and 276.

In response to determining that the spacecraft is responsible for determining one or more actions resulting from the nowcasts (e.g., as part of operation 254), then the spacecraft determines one or more actions resulting from the nowcasts in block 278. In operation 280, the scheduler 206 may send the nowcasts (e.g., received in operation 252) to the transmission network 208. In operation 282, the transmission network 208 may send the nowcasts to the spacecraft 1 210. In operation 284, the spacecraft 1 210 may determine one or more actions resulting from the nowcasts. In operation 286, spacecraft 1 210 may update its on-board schedule with the actions. In operation 288, the spacecraft 1 210 may perform one or more actions. In an embodiment, there may be a significant time lapse between spacecraft 1 210 performing operations 286 and 288.

If the spacecraft 1 210 determined that one or more actions relate to spacecraft 2 212 (e.g., as part of operation 284), then the spacecraft 1 210 may send these actions to spacecraft 2 212 (e.g., as part of optional block 290). In operation 292, the spacecraft 1 210 may send the actions to the transmission network 208. In operation 294, the transmission network 208 may send the actions to the spacecraft 2 212. In operation 296, the spacecraft 2 212 may update its schedule with the received actions. In operation 298, the spacecraft 2 212 may perform one or more actions. In an embodiment, there may be a significant time lapse between spacecraft 2 212 performing operations 296 and 298.

In optional operation 221, spacecraft 1 210 and ground station 202 (e.g., scheduler 206) may establish communications and exchange data as part of operation 302.

In optional operation 223, spacecraft 2 212 and ground station 202 (e.g., scheduler 206) may establish communications and exchange data as part of operation 306.

Data transfer between the ground station 202, nowcasting node 204, and spacecraft (e.g., spacecraft 106a-106c with reference to FIG. 1, 210, 212 with reference to FIGS. 2A-B, etc.) may be accomplished using a robust and reliable communication protocol (e.g., based on TCP/IP, etc.) that includes, for example, mechanisms for data compression, encryption, and error correction to ensure secure and efficient transmission. Communication frequencies may range from ultra high frequency (UHF) and very high frequency (VHF) for basic telemetry to X-band and Ka-band for high-volume data transfers.

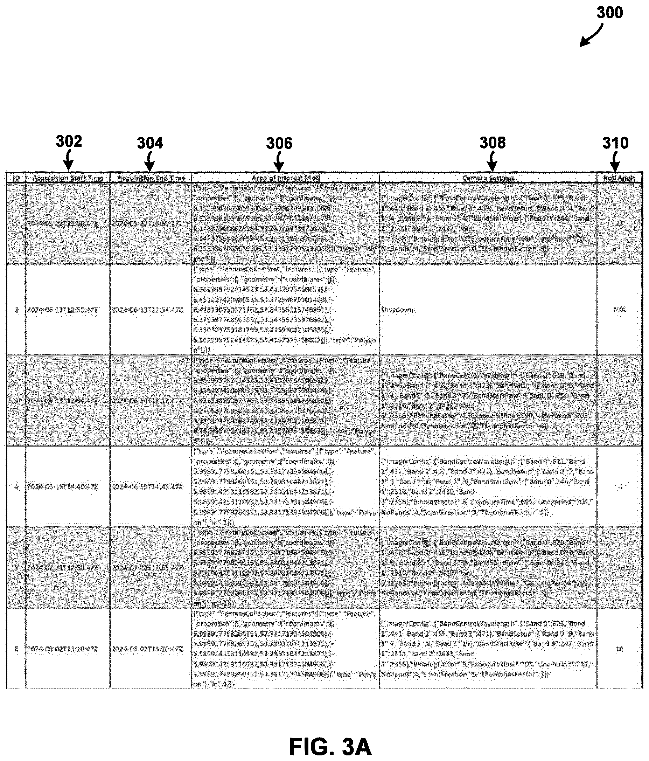

FIGs. 3A-3C are tables that illustrate schedules, nowcasts, and their associated actions in accordance with some embodiments.

Specifically, FIG. 3A illustrates a table 300 that contains a schedule, which may be used by a spacecraft to determine when it should perform an action (e.g., acquire images, shutdown). Table 300 may be created and/or updated by the ground station (e.g., as part of operations 222 and 258 by schedular 206 with reference to FIGs. 2A-B) or by a spacecraft (e.g., as part of operations 228, 264, 274, 286, and 296 by spacecraft 1 210 and spacecraft 2 212 with reference to FIGs. 2A-B).

Each row in table 300 contains an image acquisition start time 302, an image acquisition end time 304, an area of interest 306, camera settings 308, and a roll angle for the camera relative to the spacecraft 310. The areas of interest 306 are expressed using polygons defined by a series of longitude and latitude pairs, and the camera settings 308 contain settings that may be used by the camera to capture images. In an embodiment, some of the columns for any row may not contain values (e.g., a shutdown may be scheduled between an image acquisition start time 302 and an image acquisition end time 304 without requiring an area of interest 306).

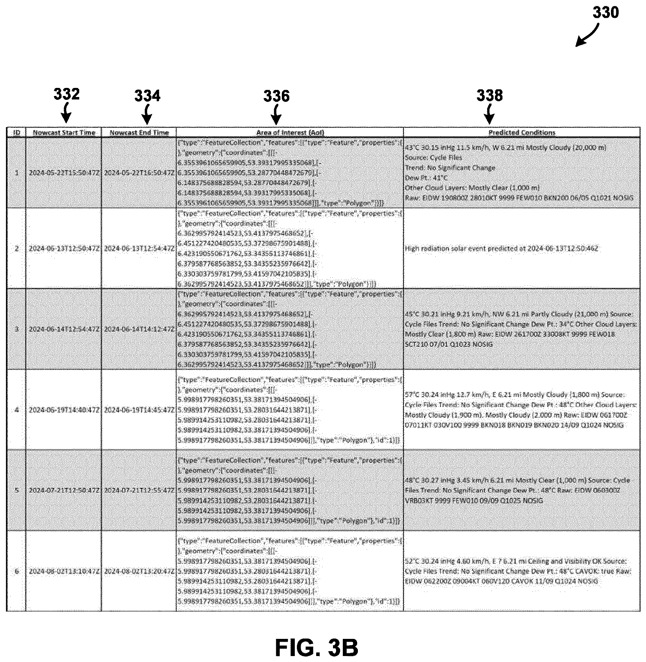

FIG. 3B illustrates a table 330 that contains nowcasts. Table 330 may be created and/or updated by the ground station (e.g., as part of operation 218 by the schedular 206 with reference to FIGs. 2A-B).

Each row in table 330 contains a nowcast start time 332, a nowcast end time 334, an area of interest 336, and the predicted conditions 338. The areas of interest 336 are expressed using polygons defined by a series of longitude and latitude pairs. The predicted conditions 338 may contain information relating to the weather on Earth (e.g., wind speed, wind direction, cloud coverage at different altitudes, cloud type or opacity) or events in space (e.g., high radiation solar events).

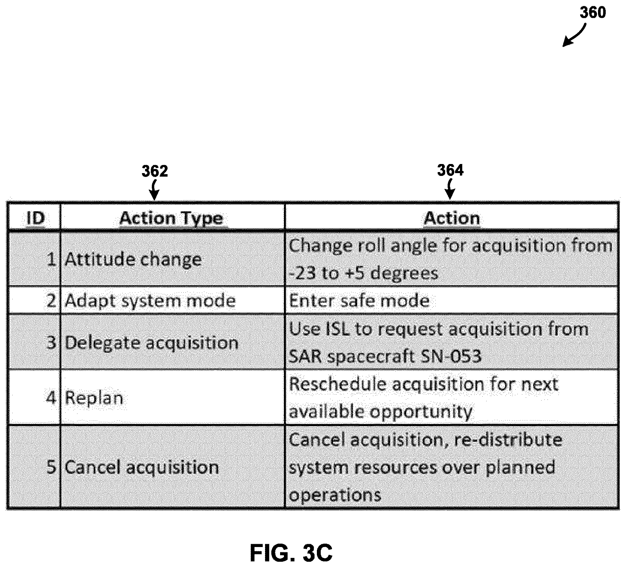

FIG. 3C illustrates a table 360 that contains actions that may be performed by a ground station or spacecraft in response to certain nowcasts. Table 360 may be used by the ground station (e.g., as part of operation 258 by schedular 206 with reference to FIGs. 2A-B) or by a spacecraft (e.g., as part of operation 284 by spacecraft 1 210 with reference to FIGs. 2A-B).

Each row in table 360 contains an action type 362, and one or more actions 364. In an embodiment, the actions may include: change roll angle for acquisition from -23 to +5 degrees (row 1); enter safe mode (row 2); use inter satellite link to request acquisition from SAR spacecraft SN-053 (row 3); reschedule acquisition for next available opportunity (row 4); and cancel acquisition, re-distribute system resources over planned operations (row 5).

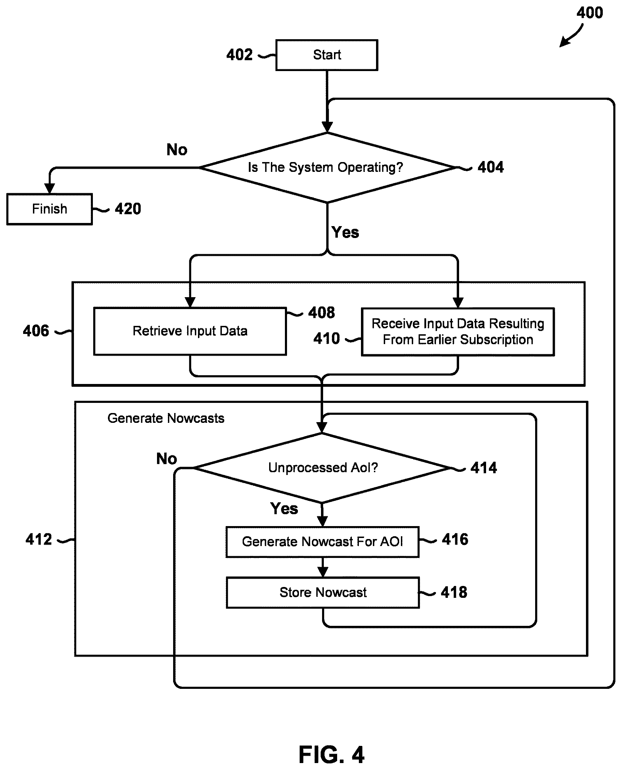

FIG. 4 is a process flow diagram illustrating a method 400 of generating nowcasts in accordance with some embodiments. Method 400 may be performed by a processor that is part of a nowcasting node (e.g., as part of operation 218 performed by nowcasting node 204 with reference to FIGs. 2A-B). The process may start in block 402. For example, the processing system may allocate working memory, reset state registers, and create a timing entry that defines the cadence for subsequent nowcast generation so that later operations start from a clean context and follow a consistent schedule.

In determination block 404, the processing system may determine whether the nowcasting node is operating. In some embodiments, the processing system may accomplish this by evaluating an operational flag that reflects whether the nowcasting node operates within nominal parameters. For example, the processing system may read a watchdog register, compare the elapsed interval since the last heartbeat message with a threshold, and decide whether execution continues or the sequence terminates. In response to determining that the nowcasting node is operating (i.e., determination block 404 = "Yes"), the processing system may obtain input data in block 406 and generate nowcasts in block 412. For example, in block 406, the processing system may read ground-based sensor telemetry stored in a message queue, combine that telemetry with orbital ephemerides, and merge recently captured satellite imagery held in shared memory.

In block 408, the processing system may retrieve input data by requesting it from one or more sources. That is, the processing system may retrieve additional input data through active queries. For example, the processing system may open a secure socket to a meteorological server and request cloud-cover tiles that overlap the current geographical coordinates of interest.

In block 410, the processing system may receive input data from one or more sources as a result of an earlier subscription. For example, the processing system may accept publish-subscribe messages from automated weather stations and parse the encoded observations for temperature, humidity, and wind vectors to enhance the environmental snapshot. These sources may be internal or external to the nowcasting node and/or ground station. The processing system may perform one or more of blocks 408 and 410, and the processing system may perform these blocks in series or parallel.

In block 412, the processing system may generate provisional nowcasts after consolidating the inputs collected in blocks 406, 408, and 410. For example, the processing system may load a convolutional-recurrent neural-network model and execute inference across the multi-source observations to produce tile-level predictions that cover a five-minute horizon and include uncertainty scores.

In determination block 414, the processing system may determine whether there is an unprocessed area of interest for which it needs to generate a nowcast. For example, the processing system may iterate through a table that pairs geographical tiles with time stamps and flag entries older than a predefined freshness interval so that no outdated prediction persists. This determination may be made based upon pending requests (e.g., operation 244 with reference to FIGs. 2A-B) and/or current subscriptions (e.g., operation 250 with reference to FIGs. 2A-B). In response to determining that there is an unprocessed area of interest for which the processor needs to generate a nowcast (i.e., determination block 414 = "Yes"), the processing system may generate one or more nowcasts for the area of interest in block 416. For example, the processing system may extend the neural-network input window to include higher-resolution atmospheric motion vectors and re-run inference to obtain an updated cloud-cover probability map that reflects the latest conditions.

In an embodiment, the input data could be as simple as an image of the sky taken from the ground within the area of interest, and the nowcast could be as simple as reporting if there are clouds in the image. In an alternative embodiment, the input data could be an image that was recently acquired by a spacecraft. Thus, the spacecraft may form a feedback loop to the nowcasting node.

In an embodiment, the processing system may use a machine learning algorithm with multiple inputs in order to infer a nowcast for an area of interest.

In operation 418, the processing system may store the nowcast for future retrieval (e.g., as part of operation 252 performed by nowcasting node 204 with reference to FIGs. 2A-B). For example, the processing system may write each prediction tile and its uncertainty metrics to a mapping store indexed by latitude, longitude, and epoch and thereby permit constant-time lookup during schedule construction.

In response to determining that there is not an unprocessed area of interest for which the processor needs to generate a nowcast (i.e., determination block 414 = "No"), the processing system may return to block 404.

In an alternative embodiment, blocks 414 and 416 may be modified so that the processor generates nowcasts for all areas of interest irrespective of there being any pending requests and/or current subscriptions.

In response to determining that the nowcasting node not is operating (i.e., determination block 404 = "No"), the processing system may exit, end, terminate, or finish in block 420. For example, the processing system may flush pending log entries to non-volatile memory, deallocate the working buffers, and halt the execution thread to conserve resources until the next activation signal arrives.

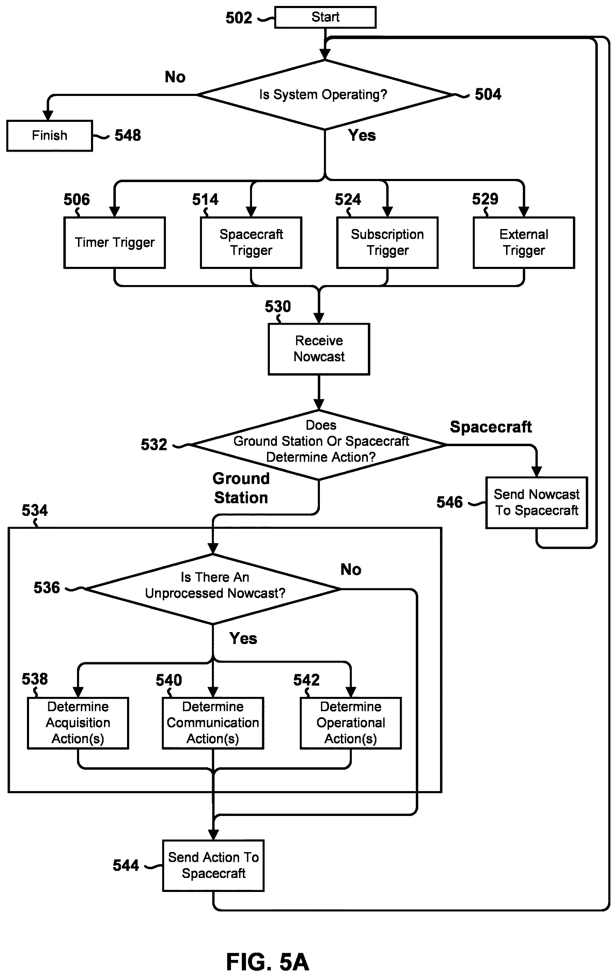

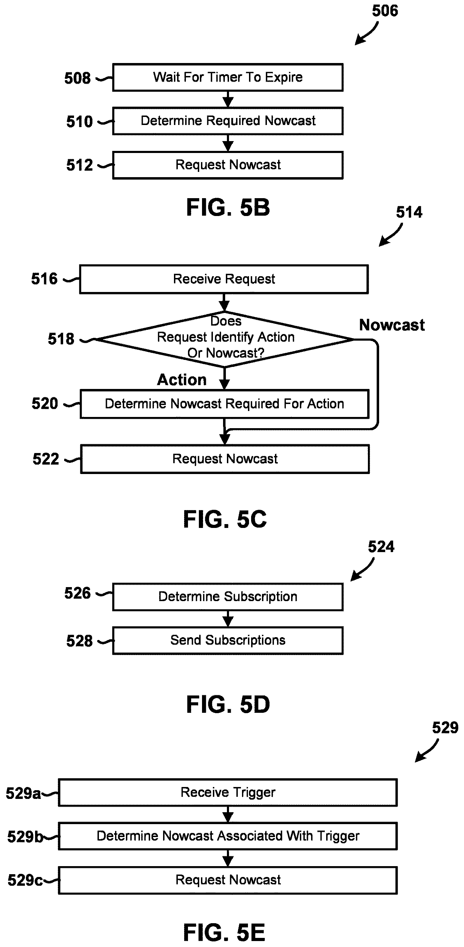

FIGs. 5A-E are process flow diagrams illustrating a method 500 of requesting nowcasts and determining actions in accordance with some embodiments. Method 500 may be performed by a processor that is part of a scheduler in a ground station (e.g., scheduler 206 with reference to FIGs. 2A-B). The process may start in block 502. For example, the processing system may allocate working memory, synchronise its internal event timer to a reference clock, and load scheduler parameters from non-volatile memory so that subsequent operations run from a defined baseline.

In determination block 504, the processing system may determine whether the system is operating. In some embodiments, the processing system may evaluate an operational status indicator that reflects whether ground-station resources operate within nominal limits. For example, the processing system may read a watchdog register, compare its timestamp against the local clock, and proceed whenever the elapsed duration falls below a watchdog threshold.

In response to determining that the system is operating (i.e., determination block 504 = "Yes"), the processing system may request nowcasts from the nowcasting node using a timer trigger in block 506 (e.g., as part of block 230 with reference to FIG. 2A), a spacecraft trigger in block 514 (e.g., as part of operation 236 with reference to FIG. 2A), a subscription trigger in block 524 (e.g., as part of operation 246 with reference to FIG. 2A), or an external trigger in block 529 (e.g., as part of operation 251 with reference to FIGS. 2A). The processing system may perform one or more of blocks 506, 514, 524, and 529, and the processing system may perform these blocks in series or in parallel.

In block 506, the processing system may schedule a nowcast request through a timer trigger. For example, the processing system may consult a cadence table, compute the next trigger epoch, and create a message that instructs the nowcasting node to supply prediction tiles at that epoch.

In block 508, the processing system may wait for a timer to expire (e.g., as part of operation 232 with reference to FIGs. 2A-B). In some embodiments, the processing system may idle until the timer established in block 506 reaches the target epoch. For example, the processing system may enter a low-power wait state and resume when an interrupt sourced from the timer asserts.

In block 510, the processing system may determine which nowcasts are required. In some embodiments, the processing system may identify prediction tiles required for the upcoming schedule cycle. For example, the processing system may examine a queue of candidate areas of interest, remove entries already linked with fresh predictions, and assemble a list of geographic identifiers still lacking current nowcasts.

In block 512, the processing system may request the required nowcasts from the nowcasting node (e.g., as part of operation 234 with reference to FIGs. 2A-B). For example, the processing system may package the geographic identifiers into a gRPC message and transmit that message over a secure TCP/IP session to the nowcasting node.

In block 514, the processing system may handle a spacecraft trigger. For example, the processing system may receive low-latency telemetry that indicates an approaching imaging opportunity and consequently assemble a nowcast request that covers the relevant coordinates.

In block 516, the processing system may receive a request from a spacecraft (e.g., as part of operation 240 with reference to FIGs. 2A-B). For example, the processing system may receive a Consultative Committee for Space Data Systems (CCSDS) packet through a ground-station antenna, decode the embedded fields, and forward the payload to the scheduler task.

In determination block 518, the processing system may determine whether the request identifies actions or nowcasts (e.g., as part of operation 242 with reference to FIGs. 2A-B). In some embodiments, the processing system may classify the spacecraft request as an action request or a prediction request. For example, the processing system may parse a header field labelled "REQ-TYPE" and branch to block 520 when the field contains "ACT" or proceed to block 522 when the field contains "NCST".

In response to determining that the request identifies one or more actions (i.e., determination block 518 = "Action(s)"), the processing system may determine which nowcasts are required for the actions in block 520. In some embodiments, the processing system may identify nowcasts required to support the detected action request. For example, the processing system may analyse the proposed imaging coordinates, expand them into tile identifiers, compare those identifiers with a prediction cache, and compile a deficit list for delivery to the nowcasting node.

In response to determining that the request identifies one or more nowcasts (i.e., determination block 518 = "Nowcast(s)"), or in response to completing block 520, the processing system may request the required nowcasts from the nowcasting node in operation 522 (e.g., as part of operation 244 with reference to FIGs. 2A-B).

In some embodiments, in block 524, the processing system may respond to a subscription trigger that governs standing prediction needs. For example, the processing system may detect the start of a long-term monitoring campaign and instruct the nowcasting node to deliver predictions for a specified latitude-longitude region at fixed intervals.

In block 526, the processing system may determine which subscriptions for nowcasts it needs based upon the spacecraft for which it is creating and updating schedules (e.g., as part of operation 248 with reference to FIGs. 2A-B). In some embodiments, the processing system may update the list of active prediction subscriptions. For example, the processing system may scan a manifest that records which satellites cover which regions, remove entries for inactive satellites, and add entries for new satellites that require prediction feeds.

In block 528, the processing system may send the subscriptions to the nowcasting node (e.g., as part of operation 250 with reference to FIGs. 2A-B). For example, the processing system may serialise the list into a JSON document and push the document to a REST endpoint exposed by the prediction service.

In some embodiments, in block 529, the processing system may respond to an external trigger.

In block 529a, the processing system may receive a trigger from an external entity (e.g., as part of operation 251a with reference to FIGs. 2A-B). For example, an agricultural sensor network may issue an MQTT message indicating a sudden soil-moisture decline and the scheduler task may capture that message from a subscribed broker.

In block 529b, the processing system may determine which nowcasts are associated with the trigger that was received in block 529a (e.g., as part of operation 251b with reference to FIGs. 2A-B). For example, the processing system may query a geospatial index with coordinates embedded in the MQTT payload and determine that cloud-cover and temperature predictions are pertinent.

In block 529c, the processing system may request the nowcasts from the nowcasting node (e.g., as part of operation 251c with reference to FIGs. 2A-B). For example, the processing system may assemble a request that cites the relevant tile identifiers and transmit the request over the secure channel used in block 512.

In block 530, the processing system may receive one or more nowcasts from the nowcasting node (e.g., as part of operation 252 with reference to FIGs. 2A-B). For example, the processing system may receive a Protobuf stream that carries prediction tensors and uncertainty metrics and store those tensors in shared memory.

In determination block 532, the processing system may determine whether the ground station or spacecraft determines the actions resulting from the nowcasts (e.g., as part of operation 254 with reference to FIGs. 2A-B). That is, in block 532, the processing system may determine whether action resolution occurs on the ground or on the spacecraft. For example, the processing system may read a configuration bit set during mission commissioning and branch to ground-based decision logic when the bit equals zero or forward predictions to the spacecraft when the bit equals one.

In response to determining the ground station determines the actions resulting from the nowcasts (i.e., determination block 532 = "Ground station"), the processing system may determine one or more actions in block 534 (e.g., as part of operation 256 with reference to FIGs. 2A-B). In some embodiments, the processing system may derive actions from the newly received predictions. For example, the processing system may feed the predictions into a heuristic evaluator that ranks acquisition opportunities by expected value and selects the top entries within resource constraints.

In determination block 536, the processing system may determine whether there is an unprocessed nowcast. For example, the processing system may iterate over cache entries, check a status flag labelled "CONS" that marks whether an action has been constructed, and push unmarked entries onto a work stack.

In response to determining that there is an unprocessed nowcast (i.e., determination block 536 = "Yes"), the processing system may determine (e.g., as part of operation 258 with reference to FIGs. 2A-B) one or more acquisition actions in block 538, determine one or more communication actions in block 540, or determine one or more operational actions in block 542. The processing system may perform one or more of blocks 538, 540, and 542, and the processing system may perform these blocks in series or in parallel. Blocks 538, 540, and 542 will be described in greater detail below.

In some embodiments, in block 538, the processing system may craft acquisition actions for each work-stack entry that refers to image capture. For example, the processing system may generate a command sequence that sets sensor gain, adjusts attitude targets, and schedules an exposure start aligned with the predicted clear-sky period.

In some embodiments, in block 540, the processing system may craft communication actions when predictions affect link selection. For example, the processing system may choose an optical downlink for a pass forecast to remain cloud-free or schedule an X-band fallback when atmospheric opacity exceeds a threshold.

In some embodiments, in block 542, the processing system may craft operational actions that protect spacecraft subsystems. For example, the processing system may schedule a safe-mode entry when a space-weather nowcast predicts proton flux above design limits.

In response to determining that there is not an unprocessed nowcast (i.e., determination block 536 = "No"), the processing system may send the actions to the spacecraft in block 544 (e.g., as part of operation 260 with reference to FIGs. 2A-B). In some embodiments, the processing system may encode the command sequences into CCSDS telecommand frames, provide those frames to the ground-station modem, and confirm transmission through return-channel acknowledgments.

In response to determining that the spacecraft determines the actions resulting from the nowcasts (i.e., determination block 532 = "Spacecraft"), the processing system may send the nowcasts to the spacecraft in block 546 (e.g., as part of operation 280 with reference to FIGs. 2A-B). For example, the processing system may down-sample the prediction tensors to reduce bandwidth, embed a validation checksum, and transmit the data during the next antenna pass.

In response to determining that the system is not operating (i.e., determination block 504 = "No"), the processing system may exit, end, terminate, or finish in block 548. For example, the processing system may flush in-memory logs to persistent storage, release network sockets, and suspend the scheduler thread until a subsequent activation event.

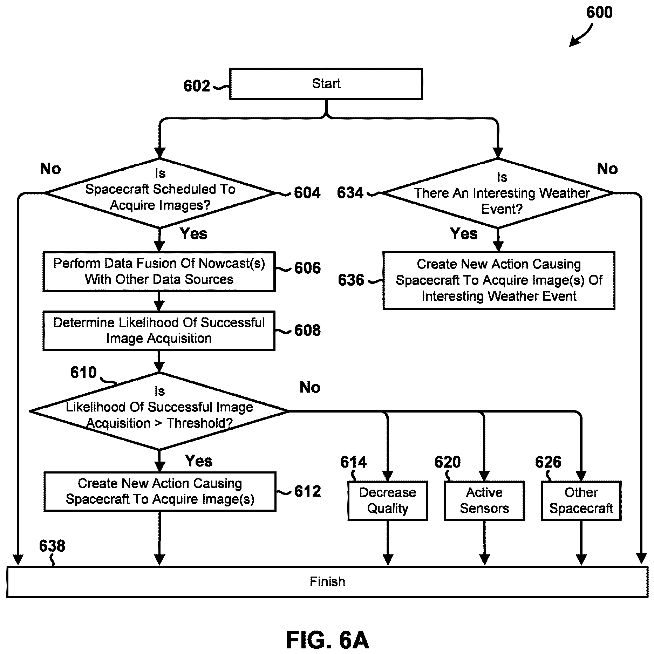

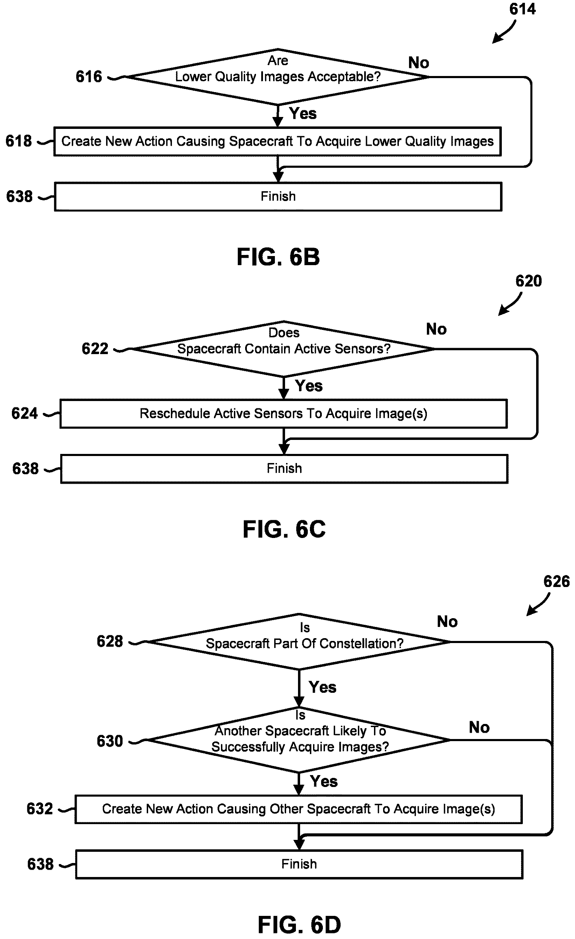

FIGs 6A-6F are process flow diagrams illustrating methods of determining one or more acquisition actions, communication actions, and operational actions in accordance with some embodiments.

FIG. 6A is a process flow diagram illustrating a method 600 of determining one or more acquisition actions in accordance with some embodiments (e.g., as part of operation 538 with reference to FIG. 5A-E). The process may start in block 602. For example, in block 602, the processing system may initiate method 600 and allocate working memory for prediction metadata. The processing system may push a zero-filled context structure onto stack memory, reset an acquisition-request queue, and load mission time from a real-time clock so that later operations reference a common baseline.

The processing system may perform one or more of blocks 604 and 634, and the processing system may perform these blocks in series or in parallel.

In determination block 604, the processing system may determine whether the spacecraft is scheduled to acquire one or more images. For example, the processing system may evaluate the current imaging schedule and identify whether the spacecraft plans to capture at least one image during the forthcoming orbital segment. In some embodiments, the processing system may scan a schedule table stored in dual-port RAM, compare each entry start time with the current epoch, and flag the cycle as active when any entry falls inside a predefined look-ahead window.

In response to determining that the spacecraft is scheduled to acquire one or more images (i.e., determination block 604 = "Yes"), the processing system may optionally perform data fusion of the nowcasts with other data sources in block 606. That is, the processing system may perform data fusion that augments nowcasts with ancillary observations after the positive finding in block 604. For example, the processing system may combine cloud-cover probability maps, surface wind vectors derived from Scatterometer passes, and terrain-elevation raster so that the likelihood engine accounts for parallax and shadow geometry.

In block 608, the processing system may determine the likelihood of successful image acquisition from the nowcasts or from the fused nowcasts. For example, the processing system may feed the fused data cube into a logistic-regression kernel and output a scalar probability that exceeds ninety-percent when the predicted cloud fraction stays below ten-percent during the planned exposure interval. As a further example, the processing system may run a Monte-Carlo sampler across perturbed cloud-optical-depth distributions, propagate each sample through a radiative-transfer model tuned for a panchromatic visible-near-infrared imager that covers the 0.45-to-0.9-micrometre band, count the trials where the predicted ground signal-to-noise ratio in that band surpasses the acceptance margin, and divide the count by the total trials to obtain the likelihood value.

In some embodiments, the processing system may determine the likelihood of successful image acquisition based on the level of occlusion by clouds of the area of interest (e.g., if the threshold is 50%, and more than 60% of the area of interest is predicted to be obscured by clouds at the time of image acquisition, then the image acquisition may be determined to be unsuccessful). In some embodiments, the processing system may determine the likelihood of successful image acquisition based on the level of occlusion by clouds of multiple areas of interest along an orbital track (e.g., if the threshold is 80% for at least 80% of the areas of interest, and there are five areas of interest with cloud obscurations of 90%, 75%, 70%, 80%, and 85%, then the image acquisition may be determined to be unsuccessful for all five areas of interest).

In determination block 610, the processing system may determine whether the likelihood of successful image acquisition is greater than a threshold. In some embodiments, the processing system may accomplish this by comparing each probability from block 608 with a configurable threshold. For example, the processing system may retrieve an eighty-percent (80%) threshold from mission parameters, perform a vectorised greater-than operation across the probability array, and route positively classified entries toward action generation.

In response to determining that the likelihood of successful image acquisition is greater than a threshold (i.e., determination block 610 = "Yes"), the processing system may create one or more new actions causing the spacecraft to acquire one or more images in block 612. For example, the processing system may allocate a command packet, insert sensor-mode parameters such as gain and exposure duration, and schedule a slew command that positions the optical axis over the target at the predicted clear-sky moment.

In response to determining that the likelihood of successful image acquisition is not greater than a threshold (i.e., determination block 610 = "No"), the processing system may decrease the image acquisition quality in block 614, activate alternative sensors in block 620, and schedule another spacecraft to acquire one or more images in block 626. The processing system may perform one or more of blocks 614, 620, and 626, and the processing system may perform these blocks in series or in parallel. In an embodiment, there may be multiple thresholds, and each threshold may be associated with different actions in blocks 614, 620, and 626.

Thus, in block 614, the processing system may decrease the image acquisition quality in response to determining that the likelihood of successful image acquisition is not greater than a threshold. In some embodiments, the processing system may lower image-quality parameters in response to determining that the probability falls below the primary threshold and remains above a secondary margin. For example, the processing system may halve spatial resolution, disable hyperspectral channels, and shorten exposure time so that power and bandwidth consumption drop while situational awareness still accrues.

In determination block 616, the processing system may determine whether lower quality images are acceptable (e.g., images with smaller dimensions, images containing more noise). For example, the processing system may determine whether mission objectives tolerate the reduced quality proposed in block 614. In some embodiments, the processing system may consult a priority flag stored with the request, observe that routine surveillance accepts coarse imagery, and approve the downgraded acquisition profile.

In response to determining that lower quality images are acceptable (i.e., determination block 616 = "Yes"), the processing system may create one or more new actions causing the spacecraft to acquire lower quality images in block 618. For example, the processing system may store new actions that task the spacecraft with lower-quality acquisitions indicated in block 616. In some embodiments, the processing system may write a command sequence into the schedule buffer that selects two-by-two pixel binning and omits payload-heater activation to conserve energy.

In block 620, the processing system may activate alternative sensors in response to determining that the likelihood of successful image acquisition is not greater than a threshold. In some embodiments, the processing system may evaluate the availability of alternative sensors able to bypass weather constraints. For example, the processing system may read a capability register that signals presence of a synthetic-aperture-radar payload and continue when that register holds an active flag.

In determination block 622, the processing system may determine whether the spacecraft contains active sensors. For example, the processing system may read the payload status word, detect an operational synthetic-aperture radar, and deem the platform suitable for cloud-penetrating observation.

In response to determining that the spacecraft contains active sensors (i.e., determination block 622 = "Yes"), the processing system may create one or more new actions causing the spacecraft to reschedule its active sensors to acquire one or more images in block 624. For example, the processing system may specify chirp bandwidth (e.g., total frequency excursion of a linear-frequency-modulated signal over the duration of one sweep or pulse), polarisation mode, and look-angle values and update the on-board timeline to initiate radar transmission during the next pass.

In block 626, the processing system may schedule another spacecraft to acquire one or more images in response to determining that the likelihood of successful image acquisition is not greater than a threshold. For example, the processing system may broadcast a tasking request through the inter-satellite network and wait for availability responses from peer spacecraft.

In determination block 628, the processing system may determine whether the spacecraft is part of a constellation. For example, the processing system may parse the operator database, note that the spacecraft belongs to a twenty-unit low-Earth-orbit constellation, and proceed with peer selection.

In response to determining that the spacecraft is part of a constellation (i.e., determination block 628 = "Yes"), the processing system may in determination block 630 determine whether another spacecraft is likely to successfully acquire one or more images (e.g., because it will pass close to, or over, the area of interest at a later time). In some embodiments, the processing system may estimate whether a peer spacecraft holds a favourable viewing geometry relative to the area of interest. For example, the processing system may propagate two-line-element sets forward twenty minutes and identify a peer track crossing within five kilometres of the target footprint under predicted clear skies.

In response to determining that another spacecraft is likely to successfully acquire one or more images (i.e., determination block 630 = "Yes"), the processing system may create one or more new actions causing another spacecraft to acquire one or more images in block 632. In some embodiments, the processing system may create actions that assign the acquisition to the selected peer spacecraft. For example, the processing system may create an inter-satellite command that encodes the target coordinates and required resolution and inject the message into the mesh-routing layer.

Independently, concurrent with, in series, or in parallel with the operations in determination block 604, the processing system may in determination block 634 determine whether there an interesting weather event prediction (e.g., the likelihood of a certain weather phenomenon occurring in the area of interest is above a certain threshold). In some embodiments, the processing system may scan nowcasts for weather phenomena that warrant opportunistic imaging when no scheduled acquisition exists. For example, the processing system may detect a ninety-percent probability (90%) of convective-storm formation inside the theatre of interest and flag that tile for immediate attention.

In an embodiment, interesting weather events may include: a 60% or greater probability of a convective storm being present in the area of interest; a 75% or greater probability of a cyclone being present in the area of interest; a 65% or greater probability of extreme rainfall (e.g., relative to a daily, monthly, or annual average) occurring in the area of interest; and a 80% or greater probability of extreme temperatures (e.g., relative to a daily, monthly, or annual minimums or maximums) in the area of interest.

In response to determining that there an interesting weather event prediction (i.e., determination block 634 = "Yes"), the processing system may create one or more new actions causing the spacecraft to acquire one or more images of the interesting weather event in block 636. For example, the processing system may assign a burst-mode optical capture at thirty-second intervals across the storm cell to support real-time disaster assessment.

The process may exit, end, terminate, or finish in block 638. For example, the processing system may flush pending command packets to non-volatile memory, release temporary buffers, and return control to the scheduler loop.

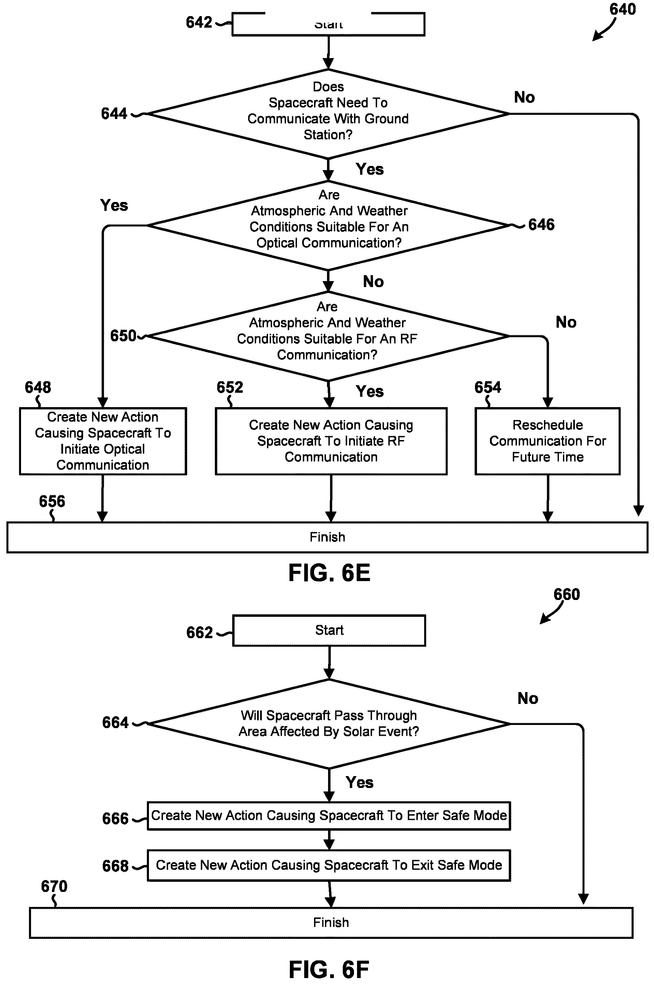

FIG. 6E is a process flow diagram illustrating a method 640 of determining one or more communication actions in accordance with some embodiments (e.g., as part of operation 540 with reference to FIG. 5A-E). The process may start in block 642.

In determination block 644, the processing system may determine whether the spacecraft needs to communicate with a ground station (e.g., to transfer acquired images). For example, the processor may decide whether the spacecraft needs a downlink session during the current ground-station visibility window. In some embodiments, the processor may compare on-board storage occupancy with a telemetry threshold, examine a queue of high-priority image files awaiting transfer, and return a positive decision when the projected buffer fill percentage exceeds a threshold value (e.g., 80%, etc.).

In response to determining that the spacecraft needs to communicate with a ground station (i.e., determination block 644 = "Yes"), the processing system may in determination block 646 determine whether atmospheric and weather conditions are suitable for an optical communication (e.g., using one or more lasers). For example, the processor may assess optical-link feasibility based on atmospheric parameters received from nowcasts. In some embodiments, the processor may read predicted cloud-top optical depth, aerosol optical thickness, and precipitable water vapour, compute a probability of clear line-of-sight within a specific laser band, and compare that probability with an eighty-percent threshold that reflects mission quality-of-service targets.

In response to determining that atmospheric and weather conditions are suitable for an optical communication (i.e., determination block 646 = "Yes"), the processing system may create one or more new actions causing the spacecraft to initiate an optical communication in block 648. For example, the processor may build a command packet that powers the laser amplifier, slews the fine-steering mirror to ground-station pointing angles derived from ephemeris data, and schedules a Reed-Solomon encoded downlink starting at the next acquisition-of-signal epoch.

In response to determining that atmospheric and weather conditions are not suitable for an optical communication (i.e., determination block 646 = "No"), the processing system may in determination block 650 determine whether atmospheric and weather conditions are suitable for a radio frequency (RF) communication. That is, the processor may evaluate radio frequency link feasibility when optical transmission appears unfavourable. For example, the processor may combine predicted rain rate, wet-air attenuation at Ka-band, and path length to compute an expected link margin, and compare that margin with a six-decibel threshold that maintains reliable forward-error-correction performance.

In response to determining that atmospheric and weather conditions are suitable for a radio frequency (RF) communication (i.e., determination block 650 = "Yes"), the processing system may create one or more new actions causing the spacecraft to initiate a radio frequency (RF) communication in block 652. For example, the processor may select modulation and coding parameters suited to the calculated link margin, energise the travelling-wave tube amplifier, and schedule an X-band downlink session that begins at ground-station acquisition-of-signal plus ten seconds to allow amplifier warm-up.

In response to determining that atmospheric and weather conditions are not suitable for a radio frequency (RF) communication (i.e., determination block 650 = "No"), the processing system may create one or more new actions causing the spacecraft to reschedule its communication for a future time in block 654. That is, the processor may defer the downlink when both optical and RF paths fail the respective thresholds. For example, the processor may write a new schedule entry that targets the next ground-station pass with lower predicted attenuation, update the data-age tracker to avoid discard of time-critical products, and trigger a housekeeping beacon that notifies operators of the delay.

In an embodiment, block 650 may occur before block 646. In an embodiment, the processing system may use a threshold value in block 646 (e.g., the probability of visibility in available wavelengths being sufficient to communicate from the spacecraft down to ground using optical communication based on atmospheric moisture content, aerosol levels, etc.). In an embodiment, the processing system may use a threshold value in block 650 (e.g., the efficiency and data rates of communication may be reduced in certain atmospheric conditions such as increased moisture content (including snow); radio frequency (RF) communication is effectively always possible with line of sight, but optimizations may be achievable when taking weather effects into account for planning communication passes).

In response to determining that the spacecraft does not need to communicate with a ground station (i.e., determination block 644 = "No"), the processing system may exit, end, terminate, or finish in block 656. For example, the processor may log the outcome code, release temporary weather-forecast buffers, and return control to the higher-level scheduler loop.

FIG. 6F is a process flow diagram illustrating a method 660 of determining one or more operational actions in accordance with some embodiments (e.g., as part of operation 542 with reference to FIG. 5A-E). The process may start in block 662.

In determination block 664, the processing system may determine whether the spacecraft will pass through an area affected by a solar event (e.g., the high radiation solar event in row 2 of table 330 with reference to FIG. 3B). In some embodiments, the processing system may compare the spacecraft ground track with nowcast tiles that report proton flux above mission threshold and determine whether the predicted path intersects an affected region. For example, the processing system may propagate the spacecraft state vector thirty minutes forward, map each waypoint to Carrington coordinates, query the nowcast database for tiles whose ≥ 10 MeV proton flux exceeds 1 × 10⁵ cm^{- 2} sr^{- 1} s^{- 1}, and register a positive decision when any waypoint latitude-longitude pair lies inside such a tile.

In response to determining that the spacecraft will pass through an area affected by a solar event (i.e., determination block 664 = "Yes"), the processing system may create one or more new actions causing the spacecraft to enter a safe mode that may protect it from damage caused by the solar event (e.g., the action depicted in row 2 of table 360 with reference to FIG. 3C) in block 666. That is, in block 666, the processing system may create actions that command the spacecraft to enter safe mode and reduce exposure damage. For example, the processing system may assemble a command sequence that parks reaction wheels, disables high-voltage payloads, retracts solar arrays to a minimum-exposure angle, and reloads a fault-protection table that tightens current and temperature limits, with a start epoch set five minutes before predicted tile entry. These actions curtail power-bus stress and shield sensitive electronics while the spacecraft traverses the hazardous region.

In block 668, the processing system may create one or more new actions causing the spacecraft to exit the safe mode when the solar event is predicted to end. Said another way, the processing system may generate actions that restore nominal operations after the solar event passes. For example, the processing system may set a timer equal to the predicted event-end epoch plus five minutes, prepare commands that deploy solar arrays, re-energise payload power buses, spin up reaction wheels, and transfer control back to the attitude controller.

In response to determining that the spacecraft will not pass through an area affected by a solar event (i.e., determination block 664 = "No"), or in response to completing block 668, the processing system may exit, end, terminate, or finish in block 670. For example, the processing system may write a log entry that records the decision outcome, release memory buffers allocated in block 662, and signal completion to the higher-level scheduler loop, which then proceeds to other pending tasks.

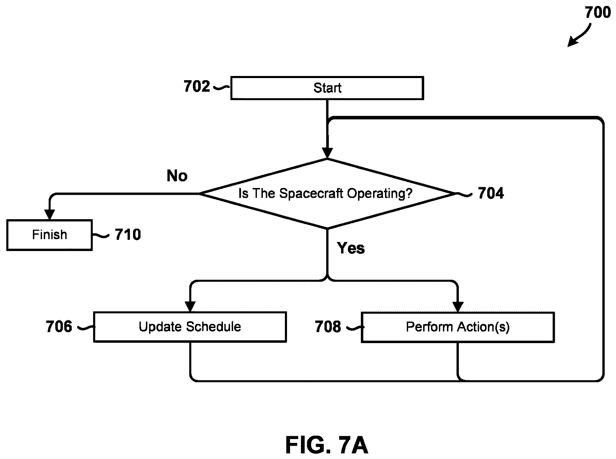

FIGs 7A-7C are process flow diagrams illustrating methods of updating a schedule and performing actions in accordance with some embodiments.

Specifically, FIG. 7A is a process flow diagram illustrating a method 700 of updating a schedule and/or performing actions in accordance with some embodiments. Method 700 may be performed by a processor that is part of a spacecraft (e.g., spacecraft 1 210 with reference to FIGS. 2A-B). The process may start in block 702.

In determination block 704, the processing system may determine whether the spacecraft is operating. In some embodiments, the processing system may evaluate an operational status flag that indicates whether the spacecraft operates within nominal limits. For example, the processing system may read power-bus voltage, payload-controller heartbeat, and thermal sensors, compare each value with predefined guard bands, and return a positive decision when all monitored parameters remain inside their respective limits.

In response to determining that the spacecraft is operating (i.e., determination block 704 = "Yes"), the processing system may update the schedule in block 706 (e.g., as part of blocks 264 and 286 with reference to FIGS. 2A-B) or perform one or more actions in block 708 (e.g., as part of operations 266 and 288 with reference to FIGS. 2A-B).

The processing system may perform one or more of blocks 706 and 708, and the processing system may perform these blocks in series or in parallel.

In some embodiments, in block 706, the processing system may update the onboard schedule whenever new action packets arrive. For example, the processing system may parse an uplinked command frame that contains revised imaging windows, replace matching rows in the schedule table, insert any new rows in chronological order, and recalculate attitude-slew lead times so that pointing manoeuvres commence at the correct offsets.

In some embodiments, in block 708, the processing system may execute scheduled actions whose start epochs fall within the current control loop. For example, the processing system may detect that an imaging action begins in thirty seconds, command the attitude-control subsystem to initiate a slew toward the target, power the payload camera, apply the sensor settings stored in the schedule row, trigger the exposure at the planned epoch, and store the captured frame in payload memory.

In response to determining that the spacecraft is not operating (i.e., determination block 704 = "No"), the processing system may exit, end, terminate, or finish in block 710. For example, the processing system may write a log entry that records the shutdown cause, flush volatile telemetry to the recorder, place the processor in a standby state, and wait for a subsequent activation command.

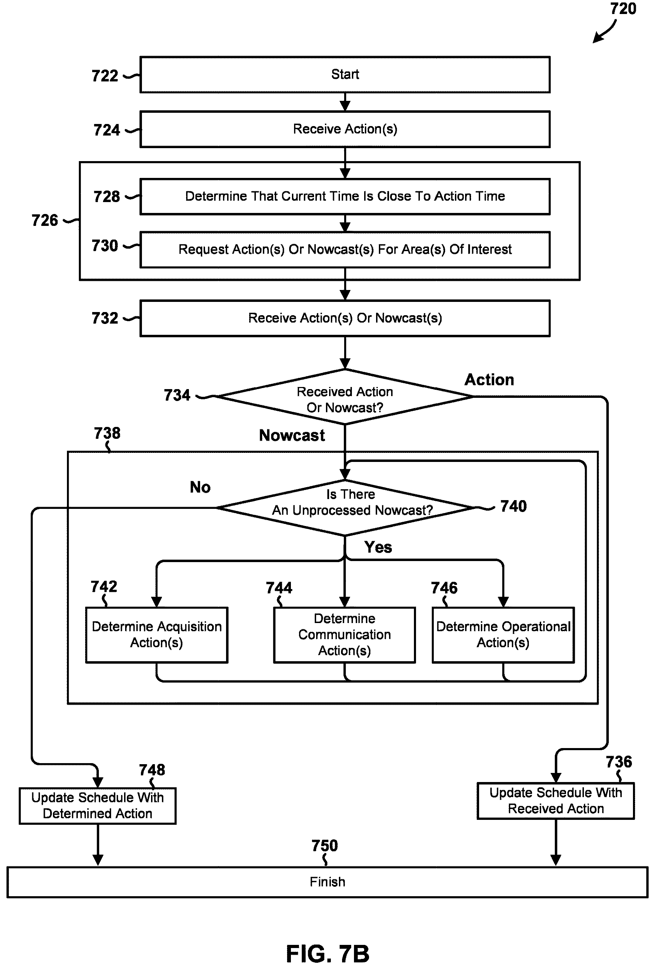

FIG. 7B is a process flow diagram illustrating a method 720 of updating a schedule in accordance with some embodiments (e.g., as part of operation 706 with reference to FIG. 7A). The process may start in block 722.

In block 724, the processing system may receive a new or updated schedule consisting of one or more actions (e.g., as part of operation 226 and 228 with reference to FIGS. 2A-B). For example, the processing system may accept a CCSDS telecommand frame, decrypt the payload through the secure-handling engine, extract rows that define imaging windows and communication passes, and store those rows in a staging buffer so that downstream logic can merge them with the resident schedule.

In block 726, the spacecraft may generate a trigger that causes it to request one or more nowcasts (e.g., as part of operation 236 with reference to FIGS. 2A-B). Specifically, in block 728, the spacecraft may determine that the current time is close to an action time (e.g., based upon the acquisition start time in column 302 of table 300 with reference to FIG. 3A). The closeness of the times may be a constant based upon the capabilities of the spacecraft (e.g., 5 minutes), or it may be based upon the type of action. In block 730, the spacecraft may request one or more actions or nowcasts for one or more areas of interest (e.g., as part of operation 238 with reference to FIGS. 2A-B).

In block 732, the processing system may receive one or more actions or nowcasts (e.g., as part of operations 262 and 282 with reference to FIGS. 2A-B). For example, the processing system may read a Protobuf stream from the downlink buffer, verify the embedded checksum, and place the decoded prediction tensors into shared memory where the action-generation task can consume them.

In determination block 734, the processing system may determine whether the spacecraft received one or more actions or one or more nowcasts. In some embodiments, the processing system may classify the received payload as either actions or nowcasts. For example, the processing system may read an application-identifier field in the packet header, route packets labelled "ACT" toward the schedule-merge routine, and route packets labelled "NCST" toward the onboard decision engine.

In response to determining that the spacecraft received one or more actions (i.e., determination block 734 = "Action(s)"), the processing system may update the schedule with the received actions in block 736 (e.g., as part of block 264 with reference to FIGS. 2A-B). For example, the processing system may scan the resident schedule for matching time slots, replace outdated rows with the incoming rows, insert any entirely new rows in chronological order, and recompute attitude-slew lead times so that manoeuvres commence at the correct offsets.

In response to determining that the spacecraft received one or more nowcasts (i.e., determination block 734 = "Nowcast(s)"), the processing system may determine the corresponding actions in block 738. That is, in block 738, the processing system may translate received nowcasts into actionable commands. For example, the processing system may feed cloud-cover probabilities into a heuristic evaluator that compares them with mission thresholds, select imaging, communication, or safe-mode templates as appropriate, and emit provisional action objects that describe sensor settings, transmitter modes, or subsystem states.

In determination block 740, the processing system may determine whether there is an unprocessed nowcast. For example, the processing system may iterate through the prediction cache, inspect a status flag within each entry, and push entries without an associated action onto a work queue so that no prediction tile stays unused.

In response to determining that there is an unprocessed nowcast (i.e., determination block 740 = "Yes"), the processing system may determine (e.g., as part of operation 284 with reference to FIG. 2B) one or more acquisition actions in block 742, determine one or more communication actions in block 744, or determine one or more operational actions in block 746 and/or perform the same or similar operations described with reference to blocks 538, 540, and 543 of FIG. 5A.

In block 748 the processing system may update the schedule with the determined actions (e.g., as part of block 286 with reference to FIGS. 2A-B). For example, the processing system may append the action objects to the schedule table, sort the table by start epoch, and issue a synchronisation event to the execution thread.

In response to completing block 736, or in response to completing block 748, the processing system may exit, end, terminate, or finish in block 750. For example, the processing system may log the schedule-update outcome, release temporary buffers, and return control to the spacecraft main loop.

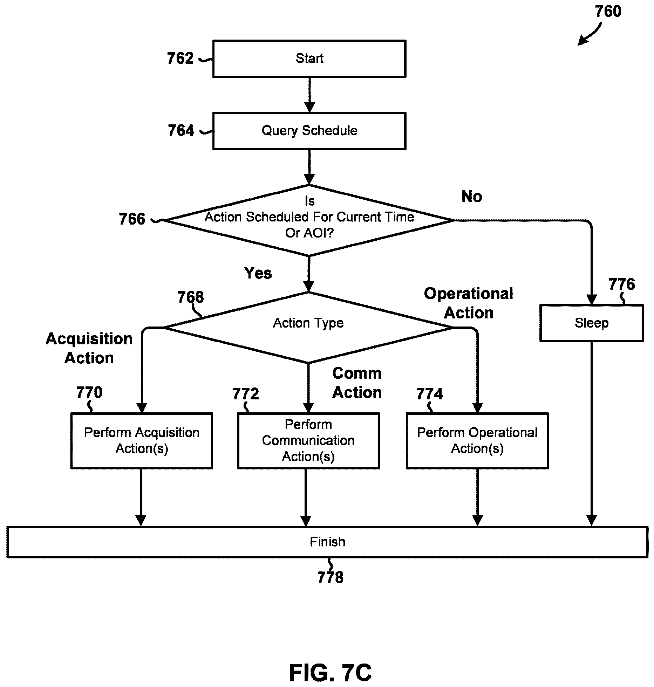

FIG. 7C is a process flow diagram illustrating a method 760 of performing one or more actions in accordance with some embodiments (e.g., as part of operation 708 with reference to FIG. 7A). The process may start in block 762.

In block 764, the processing system may query the schedule (e.g., as part of operations 266 and 288 with reference to FIGS. 2A-B). In some embodiments, the processing system may query the schedule to identify actions whose start epochs falls inside a configurable look-ahead window. For example, the processor may traverse the schedule table, compare each action start epoch with the current epoch plus a five-minute offset, and place matching rows into a candidate list that guides immediate execution.

In determination block 766, the processing system may determine whether an action is scheduled for the current time (including a time in the near future) and/or the current area of interest (i.e., the area for which the spacecraft can, or soon will be able to, acquire images). For example, the processing system may evaluate the candidate list and decide whether any action matches the present attitude footprint or the imminent orbital footprint. In some embodiments, the processor may calculate the ground-track position for the next thirty seconds, match that position against area-of-interest polygons stored with each candidate row, and return a positive decision when overlap exists.

In response to determining that an action is scheduled for the current time and/or the current area of interest (i.e., determination block 766 = "Yes"), the processing system may in determination block 768 determine the action type. In some embodiments, in block 768, the processing system may classify the selected action by type. For example, the processor may read the action-type field encoded in the schedule row, map that value to one of three categories-acquisition, communication, or operational-and route the row toward the corresponding execution handler.

In response to determining that the action type is an acquisition type (i.e., determination block 768 = "Acquisition action"), the processing system may perform one or more acquisition actions in block 770. For example, the processor may command the attitude-control subsystem to slew toward the target quaternion, power the optical payload, apply sensor settings such as gain and exposure time, trigger an exposure at the scheduled epoch, and store the captured frame in high-speed payload memory.

In response to determining that the action type is a communication type (i.e., determination block 768 = "Communication action"), the processing system may perform one or more communication actions in block 772. For example, the processor may energise the Ka-band transceiver, modulate telemetry with low-density parity-check coding, point the high-gain antenna toward the ground station using real-time ephemeris, and begin data downlink once the link-margin calculation confirms adequate signal strength.

In response to determining that the action type is an operational type (i.e., determination block 768 = "Operational action"), the processing system may perform one or more operational actions in block 774. For example, the processor may issue commands to enter safe mode during a predicted solar-particle event, which may cause reaction wheels to halt, payload power buses to shut down, and solar arrays to rotate to a protective angle until the radiation forecast falls below threshold.

Blocks 770, 772, and 774 will be described in greater detail below. In an embodiment, an action may have more than one type (e.g., the processing system may perform two or more of blocks 770, 772, and 774).

In response to determining that an action is not scheduled for the current time and/or the current area of interest (i.e., determination block 766 = "No"), the processing system may sleep in block 776. That is, the processing system may enter a low-power sleep state when no immediate action applies. For example, the processor may lower its clock frequency, gate peripheral clocks, and wait on an interrupt sourced from the next schedule timer.

In response to completing any of block 770, 772, 774, and 776, the processing system may exit, end, terminate, or finish in block 778. For example, the processor may write a status code to the housekeeping log, clear the execution flag set in block 762, and return control to the primary avionics loop so that higher-level tasks proceed.

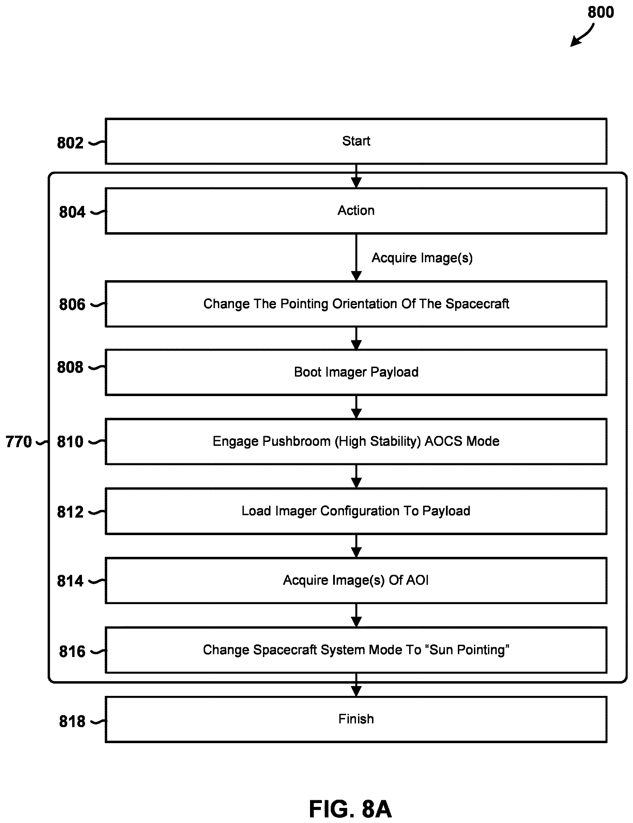

FIGs 8A-8C are process flow diagrams illustrating methods of performing one or more acquisition actions, communication actions, and operational actions in accordance with some embodiments.

Specifically, FIG. 8A is process flow diagram illustrating a method 800 of performing one or more acquisition actions in accordance with some embodiments. The process may start in block 802. For example, the processing system may initiate method 800 and allocate resources for payload-level acquisition control. The processing system may request a memory page from the real-time operating environment, copy the current spacecraft epoch into a control structure, and pull the latest acquisition rows from non-volatile storage so that downstream operations reference a coherent baseline and avoid timing drifts.

In block 804, the processing system may determine the action. That is, the processing system may inspect the active schedule and select the next acquisition action. For example, the processing system may compare the current epoch with start times stored in the schedule table, choose the first row whose start time falls within a five-minute look-ahead window, and read the associated roll-angle and area-of-interest fields.

In response to determining that the action is to acquire one or more images (i.e., block 804 = "Acquire image(s)"), the processing system may cause the spacecraft to change its pointing orientation (e.g., nadir pointing, pointing with non-zero roll angle (e.g., based upon the roll angle in column 310 of table 300 with reference to FIG. 3A)) in block 806. For example, in block 806, the processing system may command the attitude-control subsystem to rotate the spacecraft toward the required pointing orientation. In some embodiments, the processing system may compute a quaternion that represents nadir plus a six-degree roll to starboard, feed that quaternion to the reaction-wheel controller, and begin the slew so that the optical axis intercepts the target polygon before the exposure window opens.

In block 808, the processing system may boot an image payload. For example, the processing system may apply primary-bus power to the camera electronics, verify temperature sensors through a housekeeping query, and run a built-in self-test routine that checks focal-plane bias lines and data-path CRCs before enabling frame readout. Booting the payload only when needed conserves power and extends detector longevity.

In block 810, the processing system may cause the spacecraft to engage a pushbroom (high stability) AOCS mode. Said another way, in block 810, the processing system may switch the attitude-control system to a push-broom, high-stability mode suited for line-scan imaging. For example, the processing system may lower gyro filter bandwidth, freeze momentum-wheel speed updates to sub-hertz cadence, and engage fine-steering mirror feedback that holds line-of-sight error below ten microradians.

In block 812, the processing system may load an imager configuration to payload (e.g., based upon the camera settings in column 308 of table 300 with reference to FIG. 3A). For example, the processing system may program two-by-two pixel binning, set an exposure duration of 18 milliseconds, and select gain level 3 as specified in the schedule row.

In block 814, the processing system may cause the spacecraft to acquire one or more images of the areas of interest (e.g., based upon the areas of interest in column 306 of table 300 with reference to FIG. 3A). For example, the processing system may open the electronic shutter at the start of the polygon's time window, clock out successive detector lines while the spacecraft traverses the target, and write each line to high-speed payload memory together with GPS-synchronised time stamps.

In block 816, the processing system may cause the spacecraft to change its system mode to "Sun Pointing". That is, the processing system may return the spacecraft to the sun-pointing mode that maximizes, optimizes, enhances, or improves power generation and thermal balance. For example, the processing system may command the attitude controller to pitch the solar array toward the sun vector, disable the fine-steering mirror loop, and power down non-essential payload electronics once data capture completes.

The process may exit, end, terminate, or finish in block 818. For example, the processing system may log completion status, release working-memory pages allocated in block 802, and notify the scheduler loop that the payload stands idle and ready for subsequent tasking.

In an embodiment, the processing system may not perform all of blocks 804-816 (e.g., based upon the capabilities of the spacecraft).

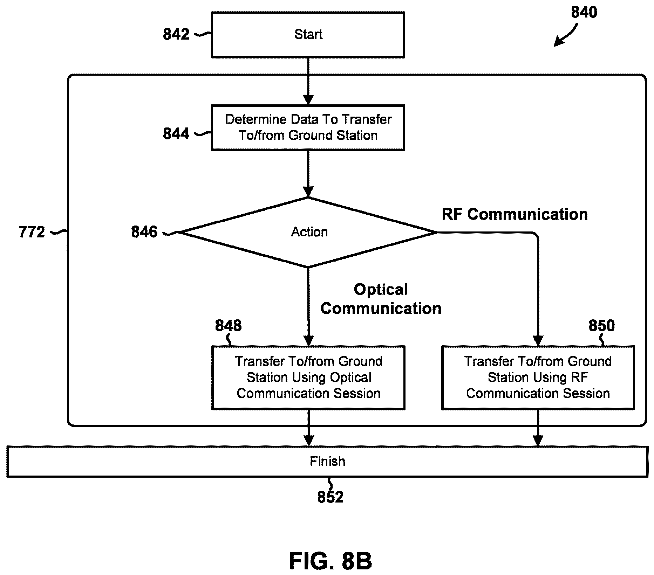

FIG. 8B is process flow diagram illustrating a method 840 of performing one or more communication actions in accordance with some embodiments. The process may start in block 842. For example, the processing system may commence method 840 and prepare resources for a communication session. The processing system may allocate a transmit-buffer region in dynamic memory, query the spacecraft clock for the current epoch, and copy the most recent link-budget table into a working structure so that later decisions reference up-to-date orbital geometry and channel parameters.

In block 844, the processing system may determine the data that it needs to transfer to or from a ground station. For example, the processing system may inspect the image-storage directory, measure cumulative file size awaiting downlink, append priority metadata such as disaster-response flags, and record the total byte count alongside a time-to-live parameter.

In determination block 846, the processing system may determine the communications type required by the action. The processing system may classify the required communication type for the upcoming pass. For example, the processing system may combine predicted cloud-fraction percentiles, expected rain-rate attenuation at Ka-band, and ground-station equipment capability, compute a link-margin pair for optical and radio frequency (RF) modes, compare each margin with predefined thresholds, and label the session "Optical communication" when the optical margin exceeds eight decibels or label it "Radio frequency communication" otherwise.

In response to determining that the communications type is optical communications (i.e., determination block 846 = "Optical communication"), the processing system may cause the spacecraft to transfer data to or from the ground station using an optical communication session (e.g., as part of operation 221 with reference to FIGS. 2A-B) in block 848. For example, the processing system may energise a 1.55-micrometre laser transmitter, slew the fine-steering mirror toward ground-station azimuth and elevation derived from ephemeris data, upload encoded image packets at eight hundred megabits per second, and close the session once the horizon-mask timer expires.

In response to determining that the communications type is radio frequency communications (i.e., determination block 846 = "Radio frequency (RF) communication"), the processing system may cause the spacecraft to transfer data to or from the ground station using a radio frequency communication session (e.g., as part of operation 221 with reference to FIGS. 2A-B) in block 850. For example, the processing system may select QPSK modulation with rate-½ LDPC coding, command the Ka-band travelling-wave-tube amplifier to nominal bias, point the gimballed high-gain antenna toward the ground station, transmit image and telemetry packets at two hundred megabits per second, and downshift the rate to one hundred megabits per second near pass end as elevation angle decreases.

In blocks 848 and 850, the processing system may adjust the amount of data that it transfers based upon the communication type, the location of the spacecraft relative to the ground station, etc.

The process may exit, end, terminate, or finish in block 852. For example, the processing system may log session statistics-bytes transmitted, modulation-coding selections, and error counts-store these statistics in non-volatile memory, release the transmit-buffer region allocated in block 842, and return control to the spacecraft main loop.

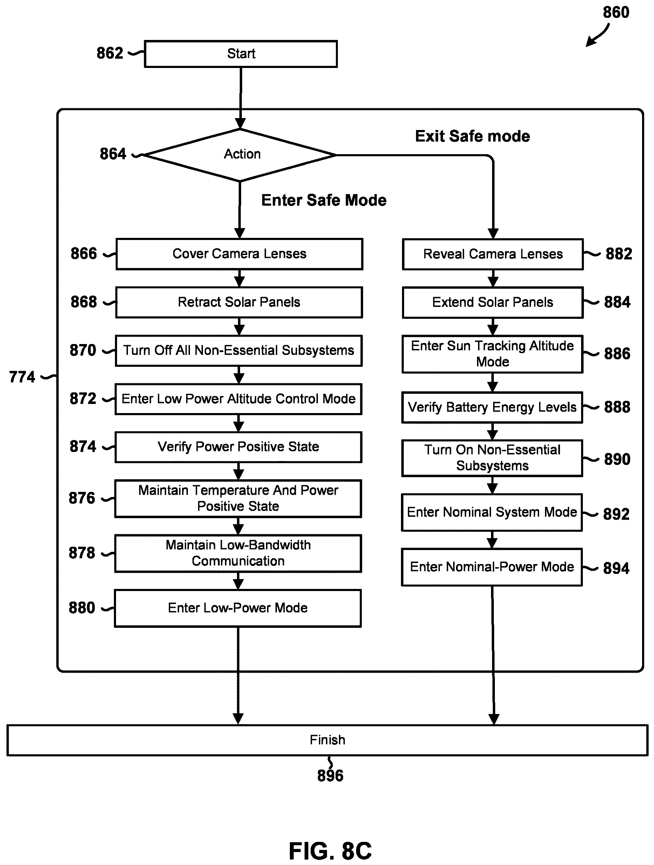

FIG. 8C is process flow diagram illustrating a method 860 of performing one or more operational actions in accordance with some embodiments. The process may start in block 862.

In determination block 864, the processing system may determine the operation type required by the action. For example, the processing system may parse the action header that arrives from the scheduler, compare the opcode with a predefined table, and branch to the safe-mode branch when the opcode equals "SAFE-ENTER" or to the recovery branch when the opcode equals "SAFE-EXIT"; this classification directs the control flow toward the proper subsystem sequence.

In response to determining that the operation type is to enter a safe mode (i.e., determination block 864 = "Enter safe mode"), the processing system may cause the spacecraft to cover one or more camera lenses (or other acquisition sensors) in block 866. That is, the processing system may command protective covers over optical or other payload apertures. For example, the processing system may energise stepper-motor drivers that rotate dust-shutter blades across each camera barrel and confirm closed-limit micro-switch feedback such that sensitive detector coatings avoid solar-particle bombardment during the event.

In block 868, the processing system may cause the spacecraft to retract its solar panels. For example, the processing system may retract deployable solar arrays to minimise charged-particle impact area. In some embodiments, the processing system may drive hinge actuators until array-fold sensors report a stowed configuration and latch the panels, thereby reducing cross-section and lowering differential charging risk.

In block 870, the processing system may cause the spacecraft to turn off all non-essential subsystems. For example, the processing system may send power-bus cut-off commands to high-voltage payload converters, science data processors, and experimental boards.

In block 872, the processing system may cause the spacecraft to enter a low-power attitude control mode. For example, the processing system may switch the attitude-control subsystem to a low-power detumble or spin-stabilised mode. In some embodiments, the processing system may disable fine-rate gyros, command reaction wheels to idle speeds, and rely on coarse sun sensors together with magnetic torquers that consume minimal energy yet sustain acceptable pointing for thermal control.

In block 874, the processing system may cause the spacecraft to verify that it is in a power positive state. For example, the processing system may sample battery state-of-charge and solar-array telemetry, calculate net charge rate, and confirm a positive watt-hour balance that supports long-duration safe-mode operation.

In block 876, the processing system may cause the spacecraft to maintain its temperature and power positive state. For example, the processing system may pulse heater lines when any panel temperature drops below a set threshold and may throttle them when battery charge approaches eighty-five percent to avoid over-voltage.

In block 878, the processing system may cause the spacecraft to maintain a low-bandwidth communication (e.g., with a ground station or other spacecraft). For example, the processing system may schedule beacon packets at one-minute intervals on UHF, transmit health summaries, and listen for ground-command acknowledgements, which keeps operators informed without drawing high transmit current.

In block 880, the processing system may cause the spacecraft to enter a low power mode. For example, the processing system may reduce core-processor clock rate and gate peripheral clocks.

In response to determining that the operation type is to exit a safe mode (i.e., determination block 864 = "Exit safe mode"), the processing system may cause the spacecraft to reveal one or more camera lenses (or other acquisition sensors) in block 882. That is, the processing system may uncover optical or radar apertures when recovery commences. For example, the processing system may drive shutter motors to the open detents, verify open-limit switches, and run a brief detector photon-transfer test that confirms readiness for future acquisitions.

In block 884, the processing system may cause the spacecraft to extend its solar panels. That is, the processing system may redeploy solar arrays to restore full generation capacity. For example, the processing system may release panel latches, command hinge motors to swing arrays until sun-sensor feedback peaks, and lock them in operational configuration.

In block 886, the processing system may cause the spacecraft and/or the attitude-control system to enter a sun tracking attitude mode. For example, the processing system may activate fine-rate gyros, compute sun-vector quaternion targets, and command reaction wheels.

In block 888, the processing system may cause the spacecraft to verify its battery energy levels. For example, the processing system may calculate depth-of-discharge, confirm values above seventy-percent capacity, and log the verification result.

In block 890, the processing system may cause the spacecraft to turn on non-essential subsystems. Said another way, the processing system may restore previously disabled subsystems (e.g., as part of block 870). For example, the processing system may sequence power-bus enable lines for science instruments, restart payload processors with integrity-checked firmware images, and run health diagnostics that confirm operational readiness.

In block 892, the processing system may cause the spacecraft to enter nominal system mode. For example, the processing system may clear fault-protection tables that limited current and temperature thresholds, reload mission timeline pointers, and assert a status packet that informs ground control of full-mission capability.

In block 894, the processing system may cause the spacecraft to enter a normal power mode. For example, the processing system may raise processor clock rates and peripheral clocks to nominal values. In some embodiments, the processing system may set core voltage regulators to performance level, synchronise high-speed serial links, and release the safe-mode semaphore, returning the spacecraft platform to standard data-collection tasks.

The process may exit, end, terminate, or finish in block 896.

In an embodiment, the processing system may not perform all of blocks 864-894 (e.g., based upon the capabilities of the spacecraft).

Some embodiments may include methods for improving the efficiency of spacecraft operations by generating and/or using nowcasts to perform autonomous scheduling operations. In some embodiments, the methods may include establishing communication links between system components (e.g., a ground station, nowcasting node, scheduler, spacecraft, etc.), receiving input data from multiple sources (e.g., satellite imagery, ground sensors, meteorological databases, etc.) at a nowcasting node, using data fusion techniques to process the input data and integrate data from different sources (and standardize formats, etc.), and using machine learning models and the processed input data to generate nowcasts for specific areas of interest. In some embodiments, the generated nowcasts may include metadata and/or information identifying predicted current and near-future environmental conditions with high spatial and temporal resolution. In some embodiments, the methods may further include storing the nowcasts in a database associated with the nowcasting node and monitoring for trigger events (e.g., requests from spacecraft, timer triggers, external triggers, etc.) at a scheduler.

In some embodiments, the methods may include requesting the nowcasts from the nowcasting node in response to detecting a trigger event, receiving the nowcasts at the scheduler, determining actions (e.g., image acquisition actions, communication actions, operational actions, etc.) based on the received nowcasts, updating a schedule with the determined actions at the scheduler, and transmitting the updated schedule and actions to the spacecraft.

In some embodiments, the methods may further include receiving the updated schedule and actions at the spacecraft and executing the actions. In some embodiments, executing the actions may include executing image acquisition actions, such as acquiring images by pointing a camera towards the area of interest, configuring camera settings based on the nowcasts, and capturing images. In some embodiments, executing the actions may include executing communication actions by, for example, determining the most suitable communication technique or technology based on the nowcasts, establishing communication links, and transferring data. In some embodiments, executing the actions may include executing operational actions by, for example, monitoring environmental conditions and adjusting spacecraft operations based on a result of the monitoring. In some embodiments, the methods may further include processing the acquired images at the spacecraft to determine quality and relevance (e.g., cloud detection and image quality assessments, etc.), and sending feedback data (e.g., image quality, success of actions, etc.) from the spacecraft to the ground station.

In some embodiments, the methods may include updating machine learning models at the nowcasting node with the feedback data to improve future nowcasts, evaluating current system resources (e.g., power, storage, etc.) at the spacecraft, and updating, optimizing, improving or enhancing resource allocation based on upcoming tasks and environmental predictions. In some embodiments, the methods may further include continuously or repeatedly monitoring system performance and environmental conditions at the scheduler and dynamically adjusting operations to balance tradeoffs between efficiency and responsiveness.

Some embodiments may include methods performed by a processing system in a ground-station device that include receiving environmental source data which may include at least multi-spectral satellite imagery and numerical weather-prediction output covering a plurality of geographic tiles, executing a machine-learning inference model that transforms the environmental source data into tile-indexed nowcast data predicting cloud opacity and ionospheric disturbance for a prediction horizon that may be less than ten minutes, computing for each pending spacecraft task in an on-orbit task queue, a success-score that may be a function of (i) the nowcast data for a target tile of the task and (ii) a current spacecraft resource vector received from telemetry, selecting a task subset whose success-scores exceed a threshold and serialising the task subset into time-tagged command packets formatted according to CCSDS standards, and transmitting the time-tagged command packets through a communication interface to an inter-satellite or ground-to-space link such that execution of the time-tagged command packets by at least one spacecraft alters an attitude-control actuator state and triggers image acquisition (physically changing an external device in real time). In some embodiments, the machine-learning inference model may include a convolutional-recurrent neural-network architecture that produces an uncertainty metric with each nowcast. In some embodiments, the computing operations may include multiplying the success-score by a reciprocal of the uncertainty metric. Some embodiments may further include logging task execution feedback returned from the spacecraft and updating the machine-learning inference model with the task execution feedback using incremental gradient-based learning.

Some embodiments may include methods performed by a processing system aboard a spacecraft that include receiving, via a radio frequency or optical transceiver, a plurality of time-tagged command packets each defining a target area-of-interest coordinate, associated sensor settings, and a scheduled execution epoch. The methods may further include merging the time-tagged command packets into a local execution timeline that may be stored in non-volatile memory, at each execution epoch in the local execution timeline commanding an attitude-control subsystem to slew the spacecraft to a pointing quaternion derived from the target area-of-interest coordinate, after attitude stabilisation, activating an imaging sensor with the associated sensor settings and acquiring image data, and storing the acquired image data in on-board solid-state storage, generating a quality-metric vector for the acquired image data and transmitting the quality-metric vector to the ground-station device as execution feedback that may be usable for retraining the machine-learning inference model of claim. In some embodiments, the processing system may disable the imaging sensor and enable a radar sensor when the associated sensor settings indicate that there is a high probability that visible-light imaging are unproductive. In some embodiments, prior to storing the acquired image data, the processing system may compress the acquired image data using an encoder selected according to an available downlink bandwidth estimate.

Some embodiments may include methods of generating spacecraft command frames that rely on real-time environmental predictions, performed by a processing system in a ground-station scheduler, that include receiving multi-source environmental measurement data that originate from orbital imagers, ground meteorological sensors, and historical archives, applying a convolutional recurrent neural-network model stored in a memory to the measurement data such that the model produces a nowcast predicting environmental conditions across geographic tiles for a prediction horizon not exceeding ten minutes and assigns a confidence score to each tile, comparing the confidence score against at least one threshold value stored in the memory so that the comparison yields a result that indicates whether a planned satellite task may proceed, deriving an action in response to the comparison, the action being an adjustment of spacecraft pointing orientation, a selection of an optical or a radio frequency communications mode, or an initiation of a protective safe mode, encoding a command frame that conforms to CCSDS standards/protocol such that the command frame identifies the derived action and may include timing information suited to an onboard scheduler, and transmitting the command frame through a ground-to-space communications link to a spacecraft so that execution of the command frame by the spacecraft modifies at least one of spacecraft pointing orientation, spacecraft communications-subsystem operating mode, or spacecraft subsystem power state. Some embodiments may further include establishing a cadence for generating the nowcast, the cadence being selected by a trigger that takes the form of a periodic timer, a spacecraft-originated request, a stored subscription condition, or receipt of an external event message. Some embodiments may further include ranking candidate satellite tasks according to expected information value and current resource availability and selecting the action from a task that ranks highest under that ranking. Some embodiments may further include selecting the optical communications mode when the nowcast predicts clear line-of-sight probability above a first threshold and selecting the radio frequency communications mode when a link-margin estimate derived from the nowcast exceeds a second threshold. Some embodiments may further include commanding image acquisition when the confidence score indicates a likelihood of cloud-free conditions greater than a predefined percentage that may be stored in the memory.

Some embodiments may include methods of executing command frames that originate from a ground station to control spacecraft subsystems, performed by a processing system in a spacecraft, that include receiving a command frame that identifies an action selected by a ground-based scheduler, parsing the command frame with a processor in the spacecraft so that the processor extracts the action and associated timing information, storing the action and the timing information in an onboard schedule located in a memory, executing the action at a time defined in the onboard schedule, execution which may include commanding an attitude-control subsystem to achieve a specified pointing orientation when the action relates to pointing, configuring a communications subsystem for optical transmission or radio frequency transmission when the action relates to communications mode, or executing a safe-mode sequence that covers payload apertures, retracts solar panels, and powers down non-essential subsystems when the action relates to safe mode, and transmitting performance telemetry to a ground station after completion of the action so that the ground station may update predictive models and scheduling rules. Some embodiments may further include engaging a push-broom high-stability attitude-control mode in response to determining that the action relates to pointing orientation and loading an imager configuration before image acquisition. Some embodiments may further include selecting modulation and coding parameters that match a link-margin calculation that may be computed onboard from ephemeris data and the nowcast included in the command frame in response to determining that the action relates to communications mode. Some embodiments may further include selecting a synthetic-aperture radar sensor for image acquisition when the nowcast contained in the command frame predicts cloud cover that may be opaque to an optical sensor. Some embodiments may further include merging performance telemetry with onboard diagnostic data and forwarding the merged data to the ground station so that the ground station may retrain the neural-network model.

Some embodiments may include methods of improving the efficiency of spacecraft by performing autonomous scheduling using nowcasts, which may include receiving, in a ground station, a trigger event, receiving, in the ground station, a nowcast, determining, in the ground station, if the ground station or a spacecraft determines one or more actions resulting from the nowcast, determining one or more actions resulting from the nowcast, and sending the actions to a spacecraft, in response to determining that the ground station determines one or more actions resulting from the nowcast, sending the nowcast to a spacecraft, in response to determining that the spacecraft determines one or more actions resulting from the nowcast, and receiving, in the ground station, data resulting from the one or more actions from the spacecraft.

In some embodiments, receiving, in a ground station, a trigger event may include receiving, from a spacecraft, a request to perform one or more actions, determining the nowcasts associated with the one or more actions, and requesting, from the nowcasting node, the nowcasts.

In some embodiments, determining one or more actions resulting from the nowcast, and sending the actions to a spacecraft, in response to determining that the ground station determines one or more actions resulting from the nowcast may include determining one or more actions relating to a second spacecraft resulting from the nowcast, and sending the one or more actions to the second spacecraft.

In some embodiments, sending the nowcast to a spacecraft, in response to determining that the spacecraft determines one or more actions resulting from the nowcast may include receiving, in the spacecraft, the nowcast, determining one or more actions resulting from the nowcast, and performing the one or more actions.

In some embodiments, determining one or more actions resulting from the nowcast may include determining one or more actions relating to a second spacecraft resulting from the nowcast, sending the one or more actions to the second spacecraft, and performing, in the second spacecraft, the one or more actions.

In some embodiments, sending the actions to a spacecraft, or, sending the nowcast to a spacecraft may include identifying the destination spacecraft to which the actions or nowcast are intended, and sending the actions or nowcast, and the identity of the destination spacecraft, to an intermediary spacecraft causing the intermediary spacecraft to send the actions or nowcast to the destination spacecraft.

In some embodiments, determining one or more actions resulting from the nowcast may include determining if the spacecraft may be scheduled to acquire an image, determining the likelihood of successfully acquiring the image based on the nowcast, creating a new action that causes the spacecraft to acquire the image in response to determining that the likelihood of successfully acquiring the image based on the nowcast may be greater than a threshold, and implementing an alternative acquisition strategy in response to determining that the likelihood of successfully acquiring the image based on the nowcast may be less than a threshold.

In some embodiments, implementing an alternative acquisition strategy in response to determining that the likelihood of successfully acquiring the image based on the nowcast may be less than a threshold may include determining if acquiring lower quality images may be acceptable, and creating a new action that causes the spacecraft to acquire a lower quality image in response to determining that acquiring lower quality images may be acceptable.

In some embodiments, implementing an alternative acquisition strategy in response to determining that the likelihood of successfully acquiring the image based on the nowcast may be greater than a threshold may include determining if using active sensors to acquire images may be acceptable, and creating a new action that causes the spacecraft to acquire the image using active sensors in response to determining that using active sensors to acquire images may be acceptable.

In some embodiments, determining one or more actions resulting from the nowcast may include determining if there may be an interesting weather event based on the nowcast, and creating a new action that causes the spacecraft to acquire an image of the weather event in response to determining that there may be an interesting weather event.

In some embodiments, determining one or more actions resulting from the nowcast may include determining if the spacecraft needs to communicate with the ground station, determining the likelihood of successfully using optical communications and radio frequency (RF) communications based on the nowcast, creating a new action that causes the spacecraft to communicate with the ground station using optical communications in response to determining that the likelihood of successfully using optical communications based on the nowcast may be greater than a threshold, creating a new action that causes the spacecraft to communicate with the ground station using radio frequency (RF) communications in response to determining that the likelihood of successfully using radio frequency (RF) communications based on the nowcast may be greater than a threshold, and creating a new action that causes the spacecraft to reschedule communications with the ground station for a future time in response to determining that the likelihood of successfully using optical communications and radio frequency (RF) communications based on the nowcast may be less than a threshold.

In some embodiments, determining one or more actions resulting from the nowcast may include determining if the spacecraft will pass through an area affected by a solar event based on the nowcast, and creating a new action that causes the spacecraft to enter safe mode in response to determining that the spacecraft will pass through an area affected by a solar event based on the nowcast.

In some embodiments, performing the one or more actions may include, querying the schedule, and performing acquisition actions in response to determining that the schedule contains an action that causes the spacecraft to acquire an image, in which the acquisition actions include at least one of changing the pointing orientation of the spacecraft, booting an image payload, engaging pushbroom (high stability) AOCS mode, loading an imager configuration to payload, and acquiring an image.

In some embodiments, performing the one or more actions may include, determining the data to transfer to/from the ground station, and performing communication actions in response to determining the data to transfer to/from the ground station, in which the communication actions include at least one of optical communications and radio frequency (RF) communications.

In some embodiments, performing the one or more actions may include querying the schedule and performing entering safe mode actions in response to determining that the schedule contains an action that causes the spacecraft to enter safe mode, in which the entering safe mode actions include at least one of covering a camera lens, retracting solar panels, turning off all non-essential subsystems, entering low-power attitude control mode, verifying power positive state, maintaining temperature and power positive state, and entering a low-power mode.

In some embodiments, the system may pair fast local weather forecasts (nowcasts) with automated task planning for Earth-observation satellites. Ground servers may merge real-time data from weather sensors and imagery to predict clouds and radiation for the next few minutes over small map tiles. A scheduler may compares those predictions with each satellite's planned imaging, communication, or safety duties and select actions that have high success odds and fit available power and storage. Compact command packets may travel through relay links to the satellites, which may add the instructions to their onboard timelines, point cameras or antennas at the appointed moment, or enter safe mode when solar storms threaten. This closed loop may prevent wasted shots of cloud-covered terrain, reduce downlink congestion, protect hardware, and allow ground teams collect more useful data with less effort.

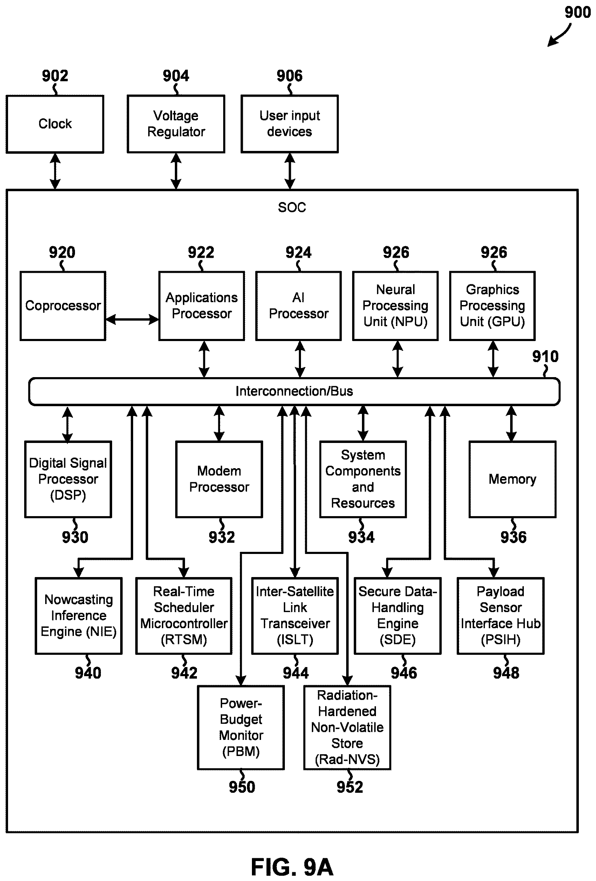

Various embodiments may be implemented in single-processor or multiprocessor computer systems, including a system-on-chip (SoC) or system-in-package (SiP). FIG. 9A illustrates an example computing system or SoC 900 architecture that may be included in edge devices implementing the various embodiments (e.g., performing autonomous scheduling based on nowcasts, etc.).

In the example illustrated in FIG. 9A, the SoC 900 includes a clock 902, voltage regulator 904, user input devices 906, coprocessor 920 (e.g., vector coprocessor), applications processor 922, AI processor 924, neural processing unit (NPU) 926, graphics processing unit (GPU) 928, digital signal processor (DSP) 930, modem processor 932, system components and resources 934, memory 936, nowcasting inference engine (NIE) 940, real-time scheduler microcontroller (RTSM) 942, inter-satellite link transceiver (ISLT) 944, secure data-handling engine (SDE) 946, payload sensor interface hub (PSIH) 948, power-budget monitor (PBM) 950, and a radiation-hardened non-volatile store (Rad-NVS) 952. The processors and components may be interconnected via an interconnection/bus 910, which may utilize advanced interconnect technologies such as high-performance networks-on-chip (NoCs), reconfigurable logic arrays, or bus architectures like CoreConnect or AMBA.

In some embodiments, any of the processors in the SoC may function as the central processing unit (CPU), microprocessor unit (MPU), or arithmetic logic unit (ALU). The SoC may execute software programs, performing arithmetic, logical, control, and input/output (I/O) operations as specified by program instructions (e.g., processor-executable instructions, etc.). One or more of the coprocessors may be configured to assist the CPU in these operations. Each processor may include one or more cores, and each processor/core may perform operations independent of the other processors/cores. For example, the SOC may include a processor that executes a first type of operating system (e.g., FreeBSD, LINUX, etc.) and a processor that executes a second type of operating system (e.g., OS X, etc.).

The clock 902 may be configured to generate a stable reference frequency and distribute that frequency through buffered outputs and align internal event timing across processors, accelerators, and peripherals. The voltage regulator 904 may be configured to accept input from external supply rails and produce regulated voltage domains that satisfy load requirements for digital, analog, and mixed-signal circuits within SoC 900. The user input devices 906 may be configured to capture operator commands through tactile, haptic, or electrical interfaces and forward encoded control signals to applications processor 922 across the I/O module. The interconnection fabric 910 may be configured to transfer data and control messages among all functional blocks within SoC 900 and deliver deterministic latency and quality-of-service guarantees that support real-time scheduling.

The vector coprocessor 920 may be configured to execute wide integer and floating-point vector instructions and accelerate linear-algebra workloads that arise in signal preprocessing. The applications processor 922 may be configured to run the primary operating system, manage high-level mission logic, and coordinate resource-allocation requests from subordinate engines. The AI processor 924 may be configured to perform general neural-network inference tasks that exceed the throughput of applications processor 922 and complement the specialised capabilities of neural processing unit 926. The neural processing unit (NPU) 926 may be configured to execute deep-learning graphs with weight compression and low-precision arithmetic and complete vision-based autonomy functions within the allocated energy budget.

The graphics processing unit 928 may be configured to rasterise scene data, run shader programs for image enhancement, and offload graphical rendering duties from applications processor 922. The digital signal processor 930 may be configured to filter sensor samples, perform transforms such as fast Fourier transforms, and compress payload data for downlink. The modem processor 932 may be configured to implement baseband protocols, modulate and demodulate waveforms for legacy ground-station links, and manage error-correction coding. The system-components- and-resources block 934 may be configured to coordinate power amplification, oscillator control, peripheral bridging, and mixed-signal housekeeping for SoC 900. The memory 936 may be configured to store executable code, neural-network parameters, nowcast tiles, schedule tables, and sensor data and provide multi-port access to requesting engines across interconnection fabric 910.

The nowcasting inference engine 940 may be configured to ingest multi-source environmental observations, execute convolutional and recurrent models, and output tile-based predictions that cover minute-scale horizons. The real-time scheduler microcontroller 942 may be configured to accept nowcast output, evaluate resource state vectors under deterministic timing control, apply priority heuristics, and issue command packets ahead of acquisition windows. The inter-satellite link transceiver 944 may be configured to generate optical or Ka-band carrier signals, route frames through a mesh network, and forward prediction tiles or command packets with timestamp fidelity. The secure data-handling engine 946 may be configured to apply authenticated encryption to outgoing payloads, decrypt incoming payloads, perform asymmetric key exchange, and enforce secure boot policies that safeguard stored binaries. The payload sensor interface hub 948 may be configured to multiplex high-speed camera, radar, and lidar streams, gate sensor clocks under scheduler control, and perform histogram checks that reject low-quality acquisitions.

The power-budget monitor 950 may be configured to sample solar-array output, battery charge state, and load currents, compute available energy margins, and trigger interrupts when scheduled operations threaten margin thresholds. The radiation-hardened non-volatile store 952 may be configured to retain model binaries, schedule archives, and tile caches across single-event upsets and restore those artefacts during recovery sequences.

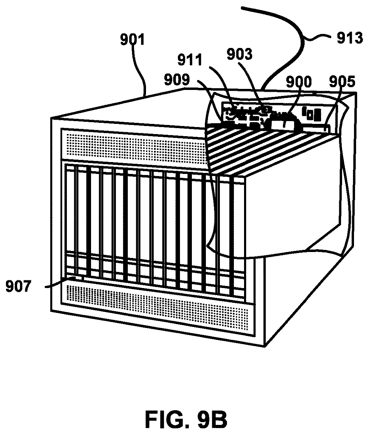

All or portions of some embodiments may be implemented in the cloud or on a variety of commercially available computing devices, such as the server computing device 901 illustrated in FIG. 9B. The server device 901 may include a SoC 900 or one or more processors 903 (e.g., multi-core processor, etc.) coupled to memory 905, storage interfaces 907 such as USB ports and NVMe slots, and network access ports 909 that allow data connections through a network interface card (NIC) 911 and a communication network 913 (e.g., an Internet Protocol (IP) network) connected to other network elements.

The processor 903 may be any programmable microprocessor, microcomputer or multiple processor chip or chips that may be configured by software instructions (applications) to perform a variety of functions, including the functions of the various embodiments described below. Multiple processors 901 may be provided, such as one processor dedicated to wireless communication functions and one processor dedicated to running other applications. Typically, software applications may be stored in the internal memory 905 before they are accessed and loaded into the processor 903. The processor 903 may include internal memory sufficient to store the application software instructions.

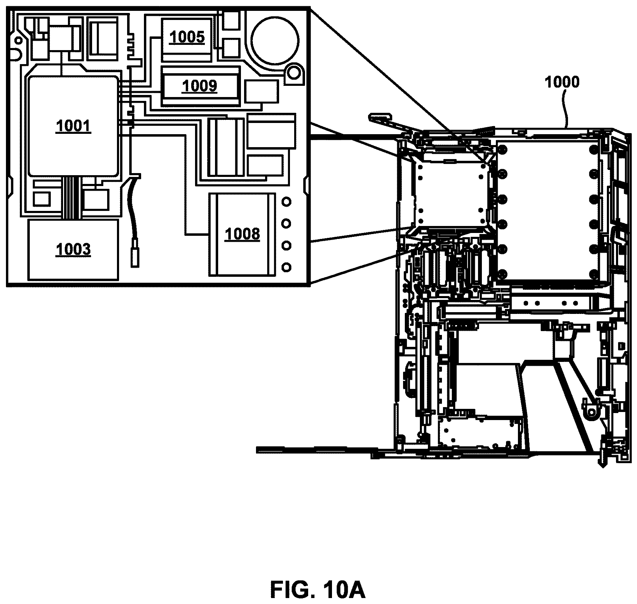

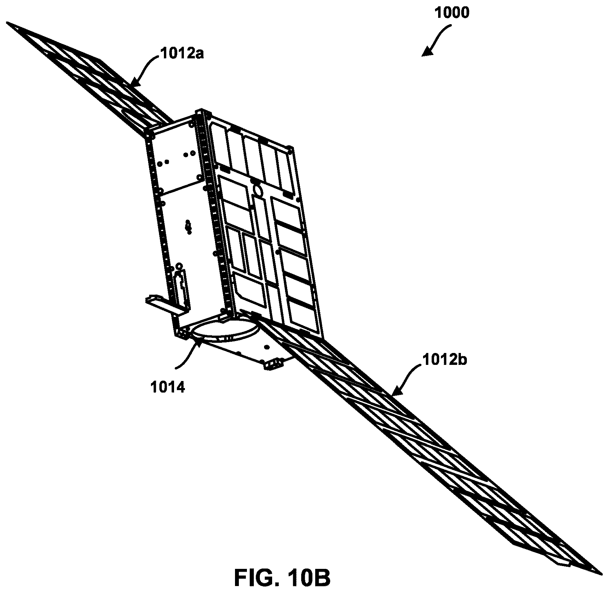

The various embodiments may be implemented on any of a variety of different types of computing devices, such as those integrated into modem spacecraft 114 such as the CubeSat 1000 illustrated in FIGs. 10A and 10B. A CubeSat 1000 may include a processor 1001 coupled to memory 1003, which may include volatile memory and a large capacity nonvolatile memory. The CubeSat 1000 may also include network access ports, communications circuitry and/or a transceiver 1005 coupled to the processor 1001 for establishing data connections with a network. The CubeSat 1000 may also include solar panels 1012a, 1012b that provide power to the satellite. These panels 1012a, 1012b may be configured to efficiently convert solar energy into electrical energy, ensuring a sustainable energy source for the satellite's operations. Additionally, the CubeSat 1000 may include various instruments and sensors 1007 for data collection and environmental monitoring. These may be coupled to and/or may include cameras 1014, temperature sensors, radiation detectors, and other scientific instruments, depending on the satellite's specific mission objectives. In addition, the CubeSat 1000 may also include attitude control systems 1009 to maintain the satellite's orientation in space, enabling accurate positioning and data gathering. All these components may be integrated into a robust and compact structure, allowing the CubeSat 1000 to perform complex tasks in the challenging environment of space.

The processor 1001 may be any programmable microprocessor, microcomputer or multiple processor chip or chips that may be configured by software instructions (applications) to perform a variety of functions, including the functions of the various embodiments described below. Multiple processors 1001 may be provided, such as one processor dedicated to wireless communication functions and one processor dedicated to running other applications. Typically, software applications may be stored in the internal memory 1002 before they are accessed and loaded into the processor 1001. The processor 1001 may include internal memory sufficient to store the application software instructions.

Implementation examples are described in the following paragraphs. While some of the following implementation examples are described in terms of example methods, further example implementations may include: the example methods discussed in the following paragraphs implemented by a computing device including a processor configured (e.g., with processor-executable instructions) to perform operations of the methods of the following implementation examples; the example methods discussed in the following paragraphs implemented by a computing device including means for performing functions of the methods of the following implementation examples; and the example methods discussed in the following paragraphs may be implemented as a non-transitory processor-readable storage medium having stored thereon processor-executable instructions configured to cause a processor of a computing device to perform the operations of the methods of the following implementation examples.

Example 1: A computer-implemented method performed by a processing system in a ground-station device, the method including receiving environmental data from multiple remote and terrestrial sources, generating prediction data from the environmental data with a prediction model executed by the processing system, evaluating a plurality of pending spacecraft tasks using the prediction data and spacecraft resource data, selecting at least one task that satisfies a predetermined selection criterion, generating command data that corresponds to the selected task, and transmitting the command data through a communication interface to at least one spacecraft.

Example 2: The method of example 1, in which generating the prediction data includes generating tile-indexed nowcasts that predict cloud opacity and ionospheric disturbance for a prediction horizon shorter than ten minutes.

Example 3: The method of any of the examples 1 and 2, in which generating the prediction data from the environmental data with the prediction model executed by the processing system includes generating the prediction data from the environmental data with a convolutional-recurrent neural-network model executed by the processing system.

Example 4: The method of any of the examples 1-3, in which evaluating the plurality of pending spacecraft tasks includes computing a success-score for each pending spacecraft task.

Example 5: The method of any of the examples 1-4, in which generating the command data that corresponds to at least one task further includes serializing the command data into time-tagged packets formatted in compliance with Consultative Committee for Space Data Systems (CCSDS) standards.

Example 6: The method of any of the examples 1-5, in which transmitting the command data through the communication interface to the at least one spacecraft causes at least one actuator aboard the at least one spacecraft to alter an orientation state and activate a sensor.

Example 7: The method of any of the examples 1-6, further including logging execution feedback received from the at least one spacecraft, and updating the prediction model with the execution feedback.

Example 8: The method of any of the examples 1-7, in which receiving the environmental data from the multiple remote and terrestrial sources includes receiving a trigger event that commences generation of the prediction data.

Example 9: The method of example 8, in which receiving the trigger event includes receiving, from a spacecraft, a digital message that requests execution of at least one action, and transmitting a request for corresponding prediction data to a nowcasting node external to the ground-station device in response to receiving the digital message.

Example 10: The method of any of the examples 1-9, in which generating command data that corresponds to at least one task further includes generating command data for a second spacecraft identified in the plurality of pending spacecraft tasks, and transmitting the command data for the second spacecraft to the second spacecraft.

Example 11: The method of any of the examples 1-10, in which transmitting the command data through the communication interface to at least one spacecraft further includes identifying a destination spacecraft, and forwarding the command data through an intermediary spacecraft that relays the command data to the destination spacecraft.

Example 12: The method of any of the examples 1-11, further including receiving, by a processing system of the at least one spacecraft, the command data, integrating the command data into a schedule stored in memory, commanding an attitude-control subsystem of the at least one spacecraft to orient the spacecraft toward target coordinates at a time tag identified in the received command data, operating an imaging sensor according to the associated sensor parameters to acquire data, and storing the acquired data in on-board storage.

Example 13: The method of example 12, in which operating the imaging sensor according to the associated sensor parameters to acquire the data includes the at least one spacecraft disabling the imaging sensor and activating a radar sensor in accordance with the associated sensor parameters.

Example 14: The method of example 12, in which storing the acquired data in the on-board storage includes compressing the acquired data with an encoder selected according to the command data.

Example 15: A computer-implemented method performed by a processing system aboard a spacecraft, the method including receiving, by the processing system, prediction data that describes environmental conditions for at least one geographic region, locally generating command data that corresponds to a selected task based on the received prediction data, integrating the command data with a schedule stored in memory, orienting the spacecraft toward a target coordinate defined in the command data at a corresponding time tag, operating an imaging sensor according to sensor parameters defined in the command data, acquiring image data with the imaging sensor, and storing the image data in non-volatile storage.

Example 16: The method of example 15, in which locally generating the command data that corresponds to the selected task based on the received prediction data includes determining an action for a second spacecraft, transmitting the action to the second spacecraft, and storing confirmation that the action left the processing system.

Example 17: The method of any of the examples 15 and 16, further including evaluating whether the schedule contains an imaging entry, calculating a success probability for that imaging entry from the prediction data, and retaining the imaging entry in response to determining that the probability exceeds a first threshold.

Example 18: The method of example 17, further including replacing the imaging entry with an alternative acquisition strategy in response to determining that the probability does not exceed the first threshold.

Example 19: The method of example 18, in which replacing the imaging entry with the alternative acquisition strategy in response to determining that the probability does not exceed the first threshold includes replacing the imaging entry with an acquisition strategy that includes generating a lower-resolution imaging entry in response to determining that lower-resolution imaging is acceptable.

Example 20: The method of example 18, in which replacing the imaging entry with the alternative acquisition strategy in response to determining that the probability does not exceed the first threshold includes replacing the imaging entry with an acquisition strategy that includes activating a radar sensor when radar imaging is acceptable.

Example 21: The method of any of the examples 15-20, further including using the received prediction data to detect an interesting weather event, and inserting an imaging entry that targets the detected weather event.

Example 22: The method of any of the examples 15-21, further including performing communication actions that include selecting optical or radio frequency transmission, and using the selected transmission to exchange data with a ground station.

Example 23: The method of any of the examples 15-22, further including determining whether downlink data transfer is necessary, calculating optical and radio frequency link success likelihoods from prediction data, and selecting optical downlink when an optical likelihood exceeds a first threshold, selecting radio frequency downlink when the optical likelihood does not exceed the first threshold and the radio frequency likelihood exceeds a second threshold, or rescheduling the downlink when neither likelihood exceeds its respective threshold.

Example 24: The method of any of the examples 15-23, further including using the received prediction data to detect a spacecraft trajectory that intersects a solar-event region exceeding a radiation limit, inserting a safe-mode entry into the schedule before intersection, and inserting a recovery entry after the radiation limit subsides.

Example 25: The method of example 24, in which inserting a safe-mode entry into the schedule before the intersection includes adding to the schedule at least one command item that, when executed by the processing system, directs the processing system to perform at least one operation including actuating a cover that blocks an optical aperture of the spacecraft, retracting each deployable solar array, disabling every subsystem identified as non-essential in a stored subsystem list, switching an attitude-control subsystem to a low-power mode, verifying that the spacecraft remains in a power-positive state, operating thermal-control hardware to maintain thermal equilibrium, or reducing a processor-clock frequency to a low-power setting.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods may be substituted for or combined with one or more operations of the methods.

A variety of memory types and technologies, both currently available and anticipated for future development, may be incorporated into systems and computing devices that implement the various embodiments. These memory technologies may include non-volatile random-access memories (NVRAM) such as magnetoresistive RAM (MRAM), resistive random-access memory (ReRAM or RRAM), phase-change memory (PCM, PC-RAM, or PRAM), ferroelectric RAM (FRAM), spin-transfer torque magnetoresistive RAM (STT-MRAM), and three-dimensional cross point (3D XPoint) memory. Non-volatile or read-only memory (ROM) technologies may also be included, such as programmable read-only memory (PROM), field programmable read-only memory (FPROM), and one-time programmable non-volatile memory (OTP NVM). Volatile random-access memory (RAM) technologies may further be utilized, including dynamic random-access memory (DRAM), double data rate synchronous dynamic random-access memory (DDR SDRAM), static random-access memory (SRAM), and pseudostatic random-access memory (PSRAM). Additionally, systems and computing devices implementing these embodiments may use solid-state non-volatile storage mediums, such as FLASH memory. The aforementioned memory technologies may store instructions, programs, control signals, and/or data for use in computing devices, system-on-chip (SoC) components, or other electronic systems. Any references to specific memory types, interfaces, standards, or technologies are provided for illustrative purposes and do not limit the claims to any particular memory system or technology unless explicitly recited in the claim language.

The foregoing method descriptions and the process flow diagrams are provided merely as illustrative examples and are not intended to require or imply that the blocks of the various aspects must be performed in the order presented. As may be appreciated by one of skill in the art the order of steps in the foregoing aspects may be performed in any order. Words such as "thereafter," "then," "next," etc. are not intended to limit the order of the blocks; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithmic steps described in connection with the aspects disclosed herein may be implemented as electronic hardware, computer software, or combinations of both. To clearly illustrate the interchangeability of hardware and software, various components, blocks, modules, circuits, and steps have been described in terms of their functionality. Whether such functionality is implemented as hardware or software may depend on the specific application and the design constraints of the overall system. Skilled artisans may implement the described functionality in different ways for each particular application, and such implementation decisions should not be interpreted as limiting or altering the scope of the claims unless explicitly recited in the claim language.

The hardware used to implement the various illustrative logics, logical blocks, modules, and circuits described in connection with the embodiments disclosed herein may include or be performed by a general-purpose processor, a digital signal processor (DSP), an application-specific integrated circuit (ASIC), a field-programmable gate array (FPGA), a graphics processing unit (GPU), a tensor processing unit (TPU), or other programmable logic devices, discrete gate or transistor logic, discrete hardware components, or any combination thereof, designed to perform the functions described. A general-purpose processor may be a microprocessor, or alternatively, it may be any conventional processor, controller, microcontroller, or state machine. A processor may also be implemented as a combination of computing devices, such as a DSP combined with a microprocessor, multiple microprocessors, one or more microprocessors used in conjunction with a DSP core, a GPU, or AI accelerators such as TPUs. Alternatively, some operations or methods may be performed by circuitry designed specifically for a given function.

In one or more embodiments, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be embodied in a processor-executable software module that resides on a non-transitory computer-readable or processor-readable storage medium. Non-transitory computer-readable or processor-readable storage media include any storage media that may be accessed by a computer or processor. By way of example, but not limitation, such non-transitory computer-readable or processor-readable media may include RAM, ROM, EEPROM, flash memory, SSDs, NVMe drives, 3D NAND flash, or any other medium capable of storing program code in the form of instructions or data structures that may be accessed by a computer. Cloud-based storage solutions, including infrastructure-as-a-service (laaS) platforms, may provide scalable and distributed options for storing and accessing program code. In addition, the operations of a method or algorithm may reside as one or more sets of instructions or code on a non-transitory processor-readable or computer-readable medium, which may be incorporated into a computer program product. Emerging technologies, such as quantum computing storage media and blockchain-based storage solutions, may enhance data integrity and security. AI and ML-improved hardware accelerators, such as GPUs, TPUs, and other dedicated processing units, may be used to efficiently execute complex algorithms.

The preceding description of the disclosed aspects is provided to enable any person skilled in the art to make or use the claims. Various modifications to these aspects may be apparent to those skilled in the art, and the generic principles defined herein may be applied to other aspects without departing from the scope of the claims. Thus, the present disclosure is not intended to be limited to the aspects shown herein but is to be accorded the widest scope consistent with the following claims and the principles and novel features disclosed herein.

## Claims

1. A computer-implemented method performed by a processing system in a ground-station device, the method comprising:
receiving environmental data from multiple remote and terrestrial sources;
generating prediction data from the environmental data with a prediction model executed by the processing system;
evaluating a plurality of pending spacecraft tasks using the prediction data and spacecraft resource data;
selecting at least one task that satisfies a predetermined selection criterion;
generating command data that corresponds to the selected task; and
transmitting the command data through a communication interface to at least one spacecraft.

2. The method of claim 1, wherein generating the prediction data includes generating tile-indexed nowcasts that predict cloud opacity and ionospheric disturbance for a prediction horizon shorter than ten minutes.

3. The method of claim 1, wherein generating the prediction data from the environmental data with the prediction model executed by the processing system comprises generating the prediction data from the environmental data with a convolutional-recurrent neural-network model executed by the processing system.

4. The method of claim 1, wherein evaluating the plurality of pending spacecraft tasks includes computing a success-score for each pending spacecraft task.

5. The method of claim 1, wherein generating the command data that corresponds to at least one task further comprises serializing the command data into time-tagged packets formatted in compliance with Consultative Committee for Space Data Systems (CCSDS) standards.

6. The method of claim 1, wherein transmitting the command data through the communication interface to the at least one spacecraft causes at least one actuator aboard the at least one spacecraft to alter an orientation state and activate a sensor.

7. The method of claim 1, further comprising:
logging execution feedback received from the at least one spacecraft; and
updating the prediction model with the execution feedback.

8. The method of claim 1, wherein receiving the environmental data from the multiple remote and terrestrial sources comprises receiving a trigger event that commences generation of the prediction data.

9. The method of claim 8, wherein receiving the trigger event comprises:
receiving, from a spacecraft, a digital message that requests execution of at least one action; and
transmitting a request for corresponding prediction data to a nowcasting node external to the ground-station device in response to receiving the digital message.

10. The method of claim 1, wherein generating command data that corresponds to at least one task further comprises:
generating command data for a second spacecraft identified in the plurality of pending spacecraft tasks; and
transmitting the command data for the second spacecraft to the second spacecraft.

11. The method of claim 1, wherein transmitting the command data through the communication interface to at least one spacecraft further comprises:
identifying a destination spacecraft; and
forwarding the command data through an intermediary spacecraft that relays the command data to the destination spacecraft.

12. The method of claim 1, further comprising:
receiving, by a processing system of the at least one spacecraft, the command data;
integrating the command data into a schedule stored in memory;
commanding an attitude-control subsystem of the at least one spacecraft to orient the spacecraft toward target coordinates at a time tag identified in the received command data;
operating an imaging sensor according to sensor parameters associated with the imaging sensor to acquire data; and
storing the acquired data in on-board storage.

13. The method of claim 12, wherein operating the imaging sensor according to the associated sensor parameters to acquire the data comprises the at least one spacecraft disabling the imaging sensor and activating a radar sensor in accordance with the associated sensor parameters, optionally, wherein storing the acquired data in the on-board storage comprises compressing the acquired data with an encoder selected according to the command data.

14. A ground-station device, comprising:
a processing system configured to:
receive environmental data from multiple remote and terrestrial sources;
generate prediction data from the environmental data with a prediction model executed by the processing system;
evaluate a plurality of pending spacecraft tasks using the prediction data and spacecraft resource data;
select at least one task that satisfies a predetermined selection criterion;
generate command data that corresponds to the selected task; and
transmit the command data through a communication interface to at least one spacecraft.

15. A non-transitory processor-readable storage medium having stored thereon processor-executable instructions configured to cause a processing system in a ground-station device to perform the method in accordance with any one of claims 1 to 13.

16. A computer-implemented method performed by a processing system aboard a spacecraft, the method comprising:
receiving prediction data that describes environmental conditions for at least one geographic region;
locally generating command data that corresponds to a selected task based on the received prediction data;
integrating the command data with a schedule stored in memory;
orienting the spacecraft toward a target coordinate defined in the command data at a corresponding time tag;
operating an imaging sensor according to sensor parameters defined in the command data;
acquiring image data with the imaging sensor; and
storing the image data in non-volatile storage.

17. The method of claim 16, wherein locally generating the command data that corresponds to the selected task based on the received prediction data comprises:
determining an action for a second spacecraft;
transmitting the action to the second spacecraft; and
storing confirmation that the action left the processing system.

18. The method of claim 16, further comprising:
evaluating whether the schedule contains an imaging entry;
calculating a success probability for that imaging entry from the prediction data; and
retaining the imaging entry in response to determining that the probability exceeds a first threshold.

19. The method of claim 18, further comprising replacing the imaging entry with an alternative acquisition strategy in response to determining that the probability does not exceed the first threshold.

20. The method of claim 19, wherein replacing the imaging entry with the alternative acquisition strategy in response to determining that the probability does not exceed the first threshold comprises replacing the imaging entry with an acquisition strategy that includes generating a lower-resolution imaging entry in response to determining that lower-resolution imaging is acceptable.

21. The method of claim 19, wherein replacing the imaging entry with the alternative acquisition strategy in response to determining that the probability does not exceed the first threshold comprises replacing the imaging entry with an acquisition strategy that includes activating a radar sensor when radar imaging is acceptable.

22. The method of claim 16, further comprising:
using the received prediction data to detect an interesting weather event; and
inserting an imaging entry that targets the detected weather event.

23. The method of claim 16, further comprising performing communication actions that include:
selecting optical or radio frequency transmission; and
using the selected transmission to exchange data with a ground station.

24. The method of claim 16, further comprising:
determining whether downlink data transfer is necessary;
calculating optical and radio frequency link success likelihoods from prediction data; and
selecting optical downlink when an optical likelihood exceeds a first threshold, selecting radio frequency downlink when the optical likelihood does not exceed the first threshold and the radio frequency likelihood exceeds a second threshold, or rescheduling the downlink when neither likelihood exceeds its respective threshold.

25. The method of claim 16, further comprising:
using the received prediction data to detect a spacecraft trajectory that intersects a solar-event region exceeding a radiation limit;
inserting a safe-mode entry into the schedule before intersection; and
inserting a recovery entry after the radiation limit subsides.

26. The method of claim 25, wherein inserting a safe-mode entry into the schedule before the intersection comprises:
adding to the schedule at least one command item that, when executed by the processing system, directs the processing system to perform at least one operation comprising:
actuating a cover that blocks an optical aperture of the spacecraft;
retracting each deployable solar array;
disabling every subsystem identified as non-essential in a stored subsystem list;
switching an attitude-control subsystem to a low-power mode;
verifying that the spacecraft remains in a power-positive state;
operating thermal-control hardware to maintain thermal equilibrium; or
reducing a processor-clock frequency to a low-power setting.

27. A spacecraft, comprising:
a processing system configured to:
receive prediction data that describes environmental conditions for at least one geographic region;
locally generate command data that corresponds to a selected task based on the received prediction data;
integrate the command data with a schedule stored in memory;
orient the spacecraft toward a target coordinate defined in the command data at a corresponding time tag;
operate an imaging sensor according to sensor parameters defined in the command data;
acquire image data with the imaging sensor; and
store the image data in non-volatile storage.

28. A non-transitory processor-readable storage medium having stored thereon processor-executable instructions configured to cause a processing system in a spacecraft to perform operations, comprising:
receiving prediction data that describes environmental conditions for at least one geographic region;
locally generating command data that corresponds to a selected task based on the received prediction data;
integrating the command data with a schedule stored in memory;
orienting the spacecraft toward a target coordinate defined in the command data at a corresponding time tag;
operating an imaging sensor according to sensor parameters defined in the command data;
acquiring image data with the imaging sensor; and
storing the image data in non-volatile storage.
